# EUROPÄISCHE PATENTSCHRIFT

(11) **EP 2 272 399 B1**
(45) Veröffentlichungstag und Bekanntmachung des Hinweises auf die Patenterteilung: **29.05.2013**
(21) Anmeldenummer: 09806908.1
(22) Anmeldetag: 27.07.2009
(51) Int. Cl.: G11B 33/04, B65D 85/58, A47B 81/06

(54) **VORRICHTUNG ZUM LAGERN VON COMPACT DISCS**
DEVICE FOR STORING COMPACT DISCS
DISPOSITIF DE STOCKAGE DE DISQUES COMPACTS

(30) Priorität: 08.08.2008 RU 2008134273
(43) Veröffentlichungstag der Anmeldung: 12.01.2011
(73) Patentinhaber: Kosenko, Mikhail Yurievich, Samarskaya obl. 445143 (RU); Karpovich, Valdimir Longinovich, Moscow 105005 (RU)
(72) Erfinder: KOSENKO, Mikhail Yurievich, Samarskaya obl. 445143 (RU)
(74) Vertreter: Sloboshanin, Sergej
(86) Internationale Anmeldenummer: PCT/RU2009/000371
(87) Internationale Veröffentlichungsnummer: WO 2010/019075

(56) Entgegenhaltungen:
- SU-A1- 1 648 755
- US-A- 1 101 623
- US-A- 5 099 995
- US-A- 5 232 275
- US-A- 5 697 684
- US-A- 5 697 684
- US-A- 5 813 740
- US-A- 5 813 740
- US-A1- 2004 238 462
- US-B1- 6 691 875

## Beschreibung

Die Erfindung betrifft eine Einrichtung zur Aufbewahrung von CDs (CD-Ordner) nach dem Oberbegriff des Anspruchs 1.

Die Einrichtung zur Aufbewahrung von CDs (nachfolgend CD-Ordner genannt) dient zur Aufbewahrung von flachen Erzeugnissen, insbesondere für optische Datenträger, z. B. CD, DVD und Blue Ray Disks.

Aus dem Stand der Technik sind mehrere Einrichtungen bekannt, die zur Aufbewahrung von CDs vorgesehen sind. Der nächstkommende Stand der Technik gegenüber der neuen Ausführung ist derjenige, welcher eine waagerechte Aufbewahrung von CDs auf flachen Ablagen vorsieht. (Unter "waagerecht" wird dabei gemeint, dass die Länge der Ablagen horizontal ihre Höhe senkrecht wesentlich überschreitet). Dabei werden die Ablagen stapelweise, d. h. übereinander, angeordnet. Das bedeutet, dass die oberen Ablagen sich auf die unteren stützen. Alle Ablagen haben Bohrungen auf einer gemeinsamen Achse, die außerhalb des Bereichs der CD-Aufbewahrung liegt. Die Ablagen sind so ausgeführt, dass die Aufnahmen für die CDs aus den Stapeln ausgefahren werden können, indem sie um eine in die Bohrungen eingesetzte Stütze gedreht werden. Dieser Stand der Technik wird z. B. in folgenden Druckschriften beschrieben: US 6502703, US 6193061, US 5779037, US 5232275, US 4998618, US 5344028, US 5099995 und US 6691875.

Ein solcher Aufbau ermöglicht es, eine beliebige CD dem Stapel zu entnehmen, ohne die übrigen CDs herausnehmen zu müssen. Bei einem solchen Aufbau hat die Einrichtung die kürzeste Länge waagerecht und somit wenig Platzbedarf auf der Standfläche. Darüber hinaus braucht sie nur wenig Raum in senkrechter Richtung dank der geringen Stärke der Ablagen.

Das gemeinsame Merkmal solcher Ausführungen besteht darin, dass die unteren Ablagen das Gewicht der oberen Ablagen aufnehmen. Folglich wirken zwischen den Ablagen Reibungskräfte, die diesem Gewicht proportional sind. Wird dann eine der Auflagen betätigt, um diese aus dem Stapel herauszuziehen (hier und nachfolgend wird gemeint, dass ein Teil der Auflage mit der Aufnahmefläche für die CD aus dem Stapel herausgefahren wird), so wird die angewendete Kraft durch die Reibungskräfte an die benachbarten, d. h. an die daran direkt anliegenden Ablagen übertragen. Das führt dazu, dass diese Ablagen ebenfalls aus dem Stapel herausfahren. Dies ist unbequem für den Benutzer, denn die Ablagen müssen dann zurück eingefahren werden. Das bedarf unnötiger Bemühungen und Zeit.

Um diese Unbequemlichkeit zu vermeiden, wird in einigen Einrichtungen eine Sperrung der Ablagen mittels elastischer Elemente angewendet. So dient z. B. in einer Einrichtung gemäß US 5697684 eine Stütze als ein solches Sperrelement. Die Stütze wirkt mit den Ablagen mittels der elastischen Zwischenelemente zusammen. Jedes dieser elastischen Zwischenelemente ist mit der Stütze fest verbunden und kommt mit seinem Vorsprung mit einer Nute in der Ablage in Kontakt, ohne dabei das Drehen der Ablage zu beschränken. Der Mangel einer solchen Sperrung besteht darin, dass die Wirkung des Sperrelements auf die Ablagen eine wahrscheinliche Drehung nicht völlig verhindert. Sie erfolgt mit einem kurzen Arm, welcher durch die Länge der Bohrungen in den Ablagen begrenzt ist.

In den aus US 2429290 und US 5813740 bekannten Einrichtungen ist das Sperren genauer und sicherer. Das liegt daran, dass das Sperrelement auf die elastischen Elemente der Ablagen einwirkt. Die elastischen Elemente sind in einem Abstand von der Drehachse an den gegenüberliegenden Seiten der Ablagen angeordnet. Darüber hinaus sind die Ablagen gemäß der zwei zuletzt angeführten Beispiele genauso wie in den Einrichtungen gemäß US 2775498, US 3392868, US 4815483, US 5099995, US 5516203, US 5524976, US 5779037, US 6626306 und US7370758 nur in eine Richtung aus der Grundsstellung drehbar, da sie durch die Elemente der Einrichtungen begrenzt werden.

Als der nächstkommende Stand der Technik gegenüber der neuen Ausführung kann die Ausführungsform der aus US 5813740 bekannten Einrichtung mit einer waagerechten Anordnung der Ablagen gelten. In diesem Fall erfolgt das Ausfahren der CD-Aufnahmeflächen aus dem Stapel, indem die Ablagen immer in die gleiche Richtung drehen. Dabei wird der Widerstand des Sperrelements überwunden, welches die elastischen Elemente der Ablagen beansprucht und somit die Ablagen im Stapel zurückhält. Dabei ist das Drehen der Ablagen in der entgegengesetzten Richtung durch ihren Anschlag an den Elementen der Einrichtung begrenzt. Somit werden die Nachbarablagen beim Herausfahren einer Ablage durch das Sperrelement gegen ein Drehen festgehalten. Das Sperrelement wirkt auf die elastischen Elemente der Ablagen ein. Um die Zuverlässigkeit einer solchen Sperrung in der Einrichtung zu steigern, ist ein feststellender Eingriff des elastischen Elements in das Sperrelement vorgesehen. Um das elastische Element außer Eingriff zu bringen, ist eine Möglichkeit vorgesehen, das elastische Element durch eine direkte Betätigung mit der Hand des Benutzers zu biegen. Dafür wird der Endteil des Elements mit dem Finger aufgedrückt. Beim Rückdrehen der Ablage schlagen ihre benachbarten Ablagen in die Elemente der Ablage an und bleiben deswegen im Stapel liegen. Ein solcher Aufbau stellt eine Sicherheit und eine Genauigkeit der Fixierung der Ablagen sicher, jedoch ist die Anwendung der Einrichtung weniger benutzerfreundlich. Erstens ist die Sperrung der Ablagen im Stapel mittels der elastischen Elemente gegen ein Drehen im Anschluss an eine herausgefahrene Ablage entweder nicht sicher genug (wenn der Eingriffsgrad mit dem Sperrelement zu gering ist) oder es bedarf zusätzlicher Bemühungen des Benutzers, um das elastische Element außer Eingriff zu setzen. Zweitens ist der Zugriff auf die Ablagen für den Benutzer nur auf eine Seite der Einrichtung begrenzt, denn die Ablagen bewegen sich nur in die Richtung dieser Zugriffsseite (im Unterschied z. B. von der Einrichtung aus US 5697684, wo es keine Drehbegrenzung aller Ablagen in eine Richtung gibt).

Durch US 2004/0238462 A1 ist eine Einrichtung zur Aufbewahrung von CDs mit einem Untersatz und zwei oder mehr darauf oben aufgestellten Stapeln übereinander angeordneter Ablagen bekannt. Die oberen Ablagen stützen sich auf den unteren ab. Die Ablagen sind mit Auflageflächen für die CDs versehen. Die Einrichtung ist so ausgebildet, dass diese Auflageflächen aus dem Stapel herausfahrbar sind, indem die Ablagen um eine außerhalb dieser Auflageflächen durchlaufende Achse drehbar sind. Die Einrichtung weist ein Sperrelement auf, welches mit dem Untersatz verbunden ist. Das Sperrelement ist entlang der genannten Achse angeordnet. Das Sperrelement steht mit den Ablagen in ihrer Grundstellung im Kontakt, wobei die Möglichkeit eines Anschlags sichergestellt ist, welcher die genannte Drehung begrenzt. Die Nachbarablagen, d. h. die zwei direkt aneinander anliegenden Ablagen stehen mit Teilen des Sperrelements so im Kontakt, dass ein Anschlag ermöglicht ist, welcher eine gleichläufige Drehung dieser Ablagen begrenzt. Das Sperrelement umfasst dabei zwei Sperrstützen. Jede der Sperrstützen begrenzt eine Drehung der Ablagen eines Stapels. Innerhalb eines Stapels müssen die in ihrer Grundstellung an dem Sperrelement anliegenden Ablagen gleichläufig ausgeschwenkt werden.

Durch US 5,697,684 (vergl. den Oberbegriff des Anspruchs 1) ist eine Einrichtung zur Aufbewahrung von CDs mit einem Untersatz und einem darauf oben aufgestellten Stapel übereinander angeordneter Ablagen bekannt. Die oberen Ablagen stützen sich auf den unteren ab. Die Ablagen sind mit Auflageflächen für die CDs versehen. Die Einrichtung ist so ausgebildet, dass diese Auflageflächen aus dem Stapel herausfahrbar sind, indem die Ablagen um eine außerhalb dieser Auflageflächen durchlaufende Achse drehbar sind. Verfügt die Einrichtung über mehrere Stapel, so bilden diese gegenseitig ein Sperrelement, welches mit dem Untersatz verbunden ist. Das Sperrelement ist dabei entlang der genannten Achse angeordnet. Das Sperrelement stellt die Möglichkeit eines Anschlags sicher, welcher die genannte Drehung begrenzt. Anstelle eines Anschlags sind in 90° Schritten verteilt angeordnete Raststellungen für die Ablagen vorgesehen, welche federelastisch eingehalten und übersprungen werden. Innerhalb eines Stapels müssen die Ablagen gleichläufig ausgeschwenkt werden.

Durch US 5,813,740 ist eine Einrichtung zur Aufbewahrung von CDs mit einem Untersatz und einem darauf oben aufgestellten Stapel übereinander angeordneter Ablagen bekannt. Die oberen Ablagen stützen sich auf den unteren ab. Die Ablagen sind mit Auflageflächen für die CDs versehen. Die Einrichtung ist so ausgebildet, dass diese Auflageflächen in gleicher Richtung der Drehung aus dem Stapel herausschwenkbar sind, indem die Ablagen um eine außerhalb dieser Auflageflächen durchlaufende Achse drehbar sind. Die Einrichtung weist ein Sperrelement auf, welches mit dem Untersatz verbunden ist. Das Sperrelement ist entlang der genannten Achse angeordnet. Das Sperrelement steht mit den Ablagen in ihrer Grundstellung im Kontakt, wobei die Möglichkeit eines Anschlags sichergestellt ist, welcher die genannte Drehung begrenzt.

Es ist Aufgabe der Erfindung, die Handlichkeit für den Benutzer zu verbessern, indem seine Bernühungen und Zeit gespart werden, die für die Suche und die Entnahme der gewünschten CD erforderlich sind. Dies erfolgt im Wesentlichen dank einer vollständigen Beseitigung der Wahrscheinlichkeit des Herausfahrens der benachbarten Ablagen aus dem Stapel im Anschluss an die gedrehte Ablage, wenn sie aus dem Stapel herausgezogen wird.

Die gestellte Aufgabe der Erfindung wird durch die Merkmale des Anspruchs 1 gelöst:
- Die Einrichtung zur Aufbewahrung von CD umfasst einen Untersatz und einen Stapel der Ablagen;
- der Stapel der Ablagen ist auf dem Untersatz von oben aufgesetzt;
- die Ablagen im Stapel sind übereinander angeordnet, wobei die Oberen sich auf den- Unteren abstützen:
- die Ablagen sind mit Aufnahmen für die CDs versehen;
- die Einrichtung bietet die Möglichkeit, dass die erwähnten Auflagen aus dem Stapel herausfahren, indem die Ablagen rings um eine Achse drehen, die außerhalb dieser CD-Auflagen verläuft,
   (Die Konstruktionsmerkmale, welche die Drehbarkeit der Ablagen sicherstellen, sind keine wesentlichen Merkmale, da sie das technische Ergebnis nicht beeinflussen. Diese Möglichkeit kann durch die Verkopplungen sichergestellt werden, die die Verschiebung der Ablage zur Drehachse begrenzen: Entweder zwischen den benachbarten Ablagen, wie es im unten angeführten Beispiel der Einrichtung der Fall ist, oder zwischen den Ablagen und der Stütze, die in die Bohrungen eingesetzt ist, welche koaxial mit der erwähnten Achse in den Ablagen ausgebildet sind, wie es im oben genannten Stand der Technik beschrieben ist);
- der CD-Ordner enthält ein Sperrelement, welches mit dem Untersatz verbunden ist; entlang der genannten Achse angeordnet ist; mit den Ablagen in ihrer Grundlage im Kontakt steht, und zwar mit einer Möglichkeit des Anschlags, welcher die genannte Drehung begrenzt;
- die benachbarten Ablagen, d. h. die Ablagen, die unmittelbar aneinander anliegen, stehen im Kontakt mit den Teilen eines Sperrelements mit der Anschlagmöglichkeit, wobei der Anschlag das Drehen dieser Ablagen in entgegengesetzten Richtungen begrenzt.

Somit sind die benachbarten Ablagen dank diesem Anschlag so ausgebildet, dass sie aus ihrer Grundstellung nur gegenläufig verdreht werden können. Folglich werden die obere und die untere Nachbarablage beim Drehen der Ablage aus ihrer Grundstellung im Stapel bleiben, trotz der auf die Nachbarablagen einwirkenden Reibungskraft von der herausgezogenen Ablage. Das heißt, dass alle übrigen Ablagen auch im Stapel bleiben.

Dank dem Anschlag schließt die vorgeschlagene Lösung die Wahrscheinlichkeit aus, dass die zur herausgezogenen Ablage benachbarten Ablagen aus dem Stapel herausfahren. Sie schließt jedoch die Wahrscheinlichkeit nicht aus, dass diese Ablagen beim Rückdrehen der herausgefahrenen Ablage, wenn sie in den Stapel zurückfährt, herausfahren.

In den oben genannten Einrichtungen aus dem Stand der Technik werden alle Ablagen aus ihrer Grundstellung drehbar nur in eine Richtung ausgebildet. Dank dem Anschlag gegen die Elemente der Einrichtungen wird umgekehrt die Möglichkeit verhindert, dass die Nachbarablagen aus dem Stapel herausfahren, wenn die herausgezogene Ablage in den Stapel zurückgeführt wird. Das eventuelle Herausfahren der Nachbarablagen beim Herausziehen der Ablage aus dem Stapel wird dagegen nicht ausgeschlossen.

Das technische Ergebnis (der positive Effekt) der Erfindung ist eine absolute Beseitigung der Möglichkeit, dass die Nachbarablagen im Anschluss an die herausgezogene Ablage aus dem Stapel herausfahren.

Die Folge dieses Ergebnisses stellt ein weiteres technisches Ergebnis dar und zwar die Ersparnis an Bemühungen und Zeit des Benutzers, um das unerwünschte Herausfahren der Nachbarablagen zu verhindern (dafür müssen die Nachbarablagen festgehalten werden) oder um die Folge dieses Herausfahrens zu beseitigen (in diesem Fall sollten die Nachbarablagen wieder zurückgeführt werden). Dieses Ergebnis wird dadurch erreicht, dass die benötigte gedrehte Ablage die oben genannten "Korrekturhandlungen" nicht stört, weil sie an der gegenüberliegenden Seite des Stapels vorgenommen werden.

Die Anwendung der elastischen Elemente zur zusätzlichen Sperrung der Ablagen verringert gleichermaßen die Wahrscheinlichkeit des unerwünschten Herausfahrens der Nachbarablagen in beiden Lösungen.

In den Einrichtungen gemäß US 5813740 und US 2429290 ist der Benutzer gezwungen, das elastische Element direkt zu betätigen, um es außer Eingriff zu bringen. In der unten beschriebenen Ausführungsform der Erfindung wird das elastische Element zum Sperren der Ablage verwendet, welches keiner solchen unmittelbaren Betätigung bedarf. Werden diese Einrichtungen verglichen, so kann ein weiteres technisches Ergebnis festgestellt werden und zwar die Ersparnis an Bemühungen und Zeit des Benutzers, welche dafür erforderlich sind, die CD dem CD-Ordner zu entnehmen. Dieses technische Ergebnis wird dadurch erreicht, dass die erwähnte benötige Betätigung des elastischen Elements bei jedem Herausfahren der Ablage erfolgen muss, und der Bedarf an den erwähnten Korrekturhandlungen nur wenig wahrscheinlich ist. Dieser Bedarf kann nur dann entstehen, wenn die Reibungskraft, die die Nachbarablagen mit sich reißt, die Widerstandskraft der elastischen Elemente überschreitet.

Die Ausführung der Ablagen ermöglicht das Herausfahren der CD-Aufnahmeflächen aus dem Stapel durch ihre Drehbarkeit in beiden Richtungen. Dadurch ist noch ein technisches Ergebnis der Erfindung bedingt. Das ist die Erweiterung des Bereichs, welcher dem Benutzer den Zugriff auf die Ablagen ergibt. Somit wird eine Möglichkeit geschaffen, die Ablageelemente, die für das Greifen der Ablagen mit der Hand oder für ihre Markierung vorgesehen sind:
- an beiden Seiten des CD-Ordners anzuordnen,
- sie länger auszubilden,
- sie in einem größeren Abstand zueinander anzuordnen, damit sie einander nicht stören.

Daraus folgt ein weiteres technisches Ergebnis: Die Suche nach der benötigten CD nimmt weniger Zeit in Anspruch.

Gemäß der bevorzugten Ausführungsform der Erfindung enthält wenigstens eine der zwei Ablagen, die derselben Ablage benachbart sind, ein Anschlagelement. Das Anschlagelement springt zur zweiten Ablage so weit vor, dass der Anschlag gegen diese zweite Ablage ermöglicht wird. Ein solcher Anschlag begrenzt das Näherkommen dieser beiden Ablagen. Wenn die Ablage aus dem Stapel herausfährt, kommt ihre obige Nachbarablage in den nun freigesetzten Raum hinunter und stützt sich auf ihrer unteren Nachbarablage ab. Wenn mindestens eine dieser zwei Nachbarablagen mit einem Anschlagelement versehen ist, welches zur anderen Ablage vorspringt, so wird ein Teil des Gewichts der oberen Ablagen durch dieses Anschlagelement aufgenommen. Somit wird die durch dieses Gewicht erzeugte Belastung der ausfahrbaren Ablage verringert. Im Endeffekt werden die genannten technischen Ergebnisse erreicht und zwar, indem die Reibungskräfte zwischen der herausgefahren Ablage und ihren Nachbarablagen abnehmen und indem die für das Herausfahren der Ablage erforderliche Kraft reduziert wird.

Beim Zurückfahren der herausgefahrenen Ablage in den Stapel wird ein weiteres technisches Ergebnis erreicht. Es handelt sich dabei um die Verringerung der Wahrscheinlichkeit, dass die Nachbarablagen der herausgezogenen Ablage aus dem Stapel herausfahren. Das liegt daran, dass die Reibungskräfte, die ein solches Herausfahren verursachen müssten, abnehmen. In der bevorzugten Ausführungsform der Erfindung ist das genannte Anschlagelement der Ablage als ein Anschlagbund ausgebildet. Der Anschlagbund hält die Ablage an der Seite ab, wo sie aus dem Stapel herausfährt. Gemäß den bevorzugten Ausführungsformen der Erfindung sind die von der Ablagendrehachse am meisten abstehenden Kanten der Anschlagbünde so ausgebildet, dass der genannte Kontakt mit dem Sperrelement des CD-Ordners ermöglicht wird. Die Anschlagbünde der Ablagen sind als Überstände (nach oben überstehend) ausgebildet.

Die bevorzugte Ausführungsform stellt ein genaueres Sperren der Ablagen sicher, indem auf die Ablagen mit dem größten Arm eingewirkt wird. In dieser Ausführungsform ist das Sperrelement mit den Außenflächen der Ablagen im Kontakt. Diese Ablagen sind von der genannten Achse in Richtung der CD-Aufnahmeflächen entfernt. Um die Ablagen in der Grundstellung zusätzlich zu sperren und um die Wahrscheinlichkeit des Herausfahrens der Nachbarablagen aus dem Stapel beim Zurückführen der Ablage in den Stapel zu verringern, sind die Ablagen gemäß den bevorzugten Ausführungsformen der Erfindung mit elastischen Elementen versehen. Die elastischen Elemente stehen im Kontakt mit dem Sperrelement in der Grundstellung der Ablagen. Die elastischen Elemente sind so ausgebildet, dass sie ihre Form elastisch ändern können (elastische Verformung), wenn sie durch das Sperrelement beansprucht werden. Ein Endteil des elastischen Elements ist mit den anderen Teilen der Ablage verbunden. Das andere freie Ende des elastischen Elements springt vom gebundenen Endteil in Richtung seiner Bewegung aus dem Stapel vor und steht im Kontakt mit dem Sperrelement, wenn diese Ablage in der Grundstellung im Stapel ist. Das elastische Element der Ablage hat an seinem freien Ende einen Vorsprung. Der Vorsprung steht im Kontakt mit dem Sperrelement auf der Seite der genannten Achse, so dass seine Verschiebung von dieser Achse begrenzt ist. Das elastische Element der Ablage hat zwei Teile, die aneinander entlang von einem bis zum anderen Ende des elastischen Elements gezogen sind und untereinander nur an diesen Enden verbunden sind.

Gemäß einer anderen bevorzugten Ausführungsform des Sperrelements haben die Ablagen Bohrungen rings um die genannte Achse. Das Sperrelement ist in diese Bohrungen eingesetzt. Dabei ist das Sperrelement als eine Stütze ausgebildet. Die Stütze enthält wenigstens ein Langloch. Die Ablagen weisen radiale Vorsprünge auf. Die radialen Vorsprünge sind zur Innenseite der Bohrungen gerichtet. Sie sind in diesem Langloch so angeordnet, dass eine Wechselwirkung mit seinen Kanten ermöglicht wird. Dabei stehen die radialen Vorsprünge der Nachbarablagen in ihrer Grundstellung im Kontakt mit verschiedenen Kanten von einem Langloch. Um die Drehung der Ablagen in dem aus dem Stapel ausgefahrenen Zustand zu begrenzen, ist die Länge des genannten Langlochs in Kreisrichtung sowie die Länge des radialen Vorsprungs der Ablage in gleicher Richtung in der bevorzugten Ausführungsform so weit gestreckt ausgebildet, dass der Anschlag dieses Vorsprungs gegen die zweite Kante dieses Langlochs nach der Drehung dieser Ablage ermöglicht wird. Der Drehwinkel muss dabei für die Entnahme der CD reichen.

Gemäß der bevorzugten Ausführungsform enthält die Stütze zwei Nuten (Löcher). Die Ablagen haben je zwei radiale Vorsprünge. Jeder der Vorsprünge passt in eines dieser Löcher hinein.

Die zwei anderen alternativen Ausführungsformen der Anordnung des Sperrelements stellen ebenfalls die Lösung der gestellten Aufgabe sicher. Gemäß der ersten alternativen Ausführungsform steht das Sperrelement im Kontakt mit den Außenflächen der Ablagen. Die Außenflächen sind dabei von der genannten Achse in die den CD-Aufnahmeflächen gegenüberliegende Richtung entfernt. Gemäß der zweiten alternativen Ausführungsform haben die Ablagen Bohrungen entlang der genannten Achse. Das Sperrelement ist in diese Bohrungen eingesetzt. Die genannte Achse verläuft außerhalb dieser Bohrungen.

Um die Einrichtung durch eine kürzere Länge benutzerfreundlicher zu machen, sind die Ablagen gemäß den bevorzugten Ausführungsformen so ausgebildet, dass eine Möglichkeit der Anordnung der CDs in den Ablagen an einer Achse gesichert ist, die mit der Drehachse der Ablagen gleichläufig ist. Das Sperrelement weist eine Längsachse auf, die zu den oben genannten Achsen parallel ist und damit in der gleichen Ebene liegt. Das Sperrelement ist als ein Stab mit einem Rundquerschnitt ausgebildet. Die genannten Achsen sind dabei senkrecht angeordnet.

Um den CD-Ordner durch eine Verbesserung des Zugriffs auf die Ablagen benutzerfreundlicher zu machen, sind die Ablagen gemäß den bevorzugten Ausführungsformen mit Griffen versehen. Die Griffe werden mit der Hand betätigt. Die Griffe sind mit den Anschlagbünden der Ablagen fest verbunden. Die Griffe stehen in Bezug darauf als wenigstens zwei oder bevorzugt vier Vertikalreihen nach außen vor. Die Griffe sind als Plättchen ausgebildet und so angeordnet, dass die nach außen herausragenden Kanten nach unten geneigt sind.

Die Erfindung wird anhand der in den Zeichnungen dargestellten Ausführungsbeispiele näher erläutert. Es zeigen:

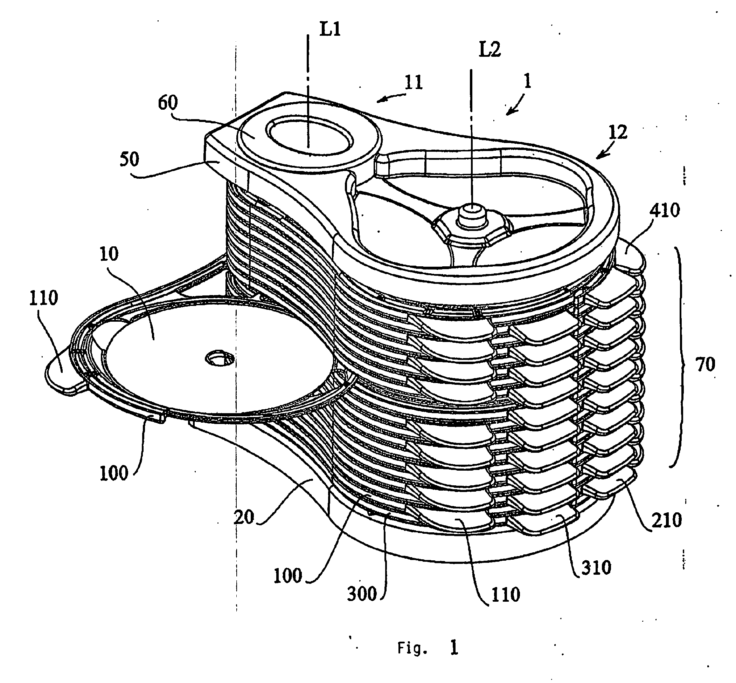

- Fig. 1: die Ansicht von oben und von links einer axonometrischen Projektion eines CD-Ordners 1 mit einer herausgefahrenen Ablage 100. Der CD-Ordner 1 hat 40 Ablagen zur Aufbewahrung von CDs,

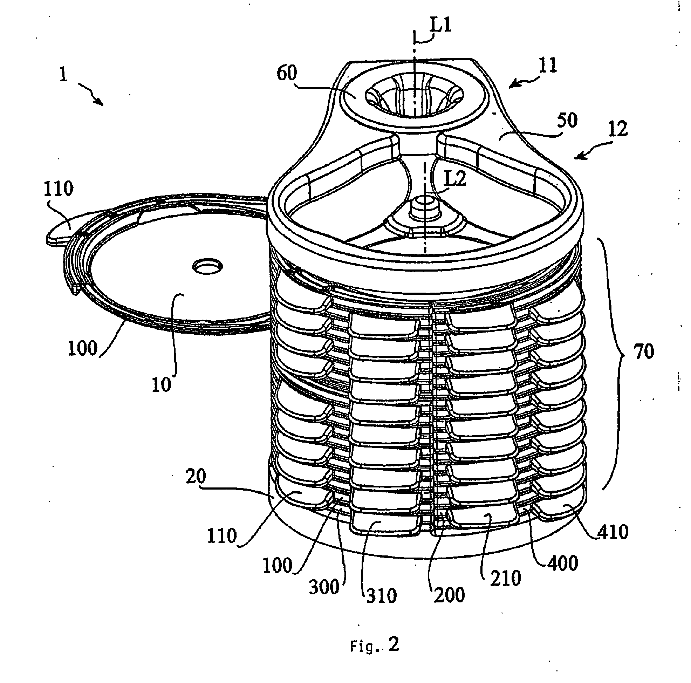

- Fig. 2: die Ansicht von oben und von unten der axonometrischen Projektion des CD-Ordners 1,

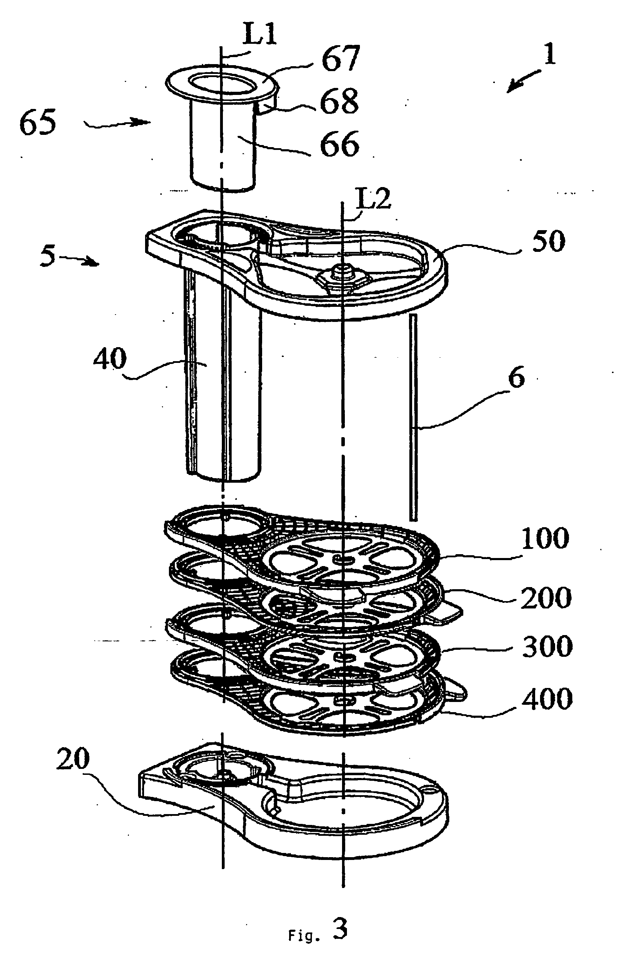

- Fig. 3: die axonometrische Projektion der Explosionszeichnung des CD-Ordners 1,

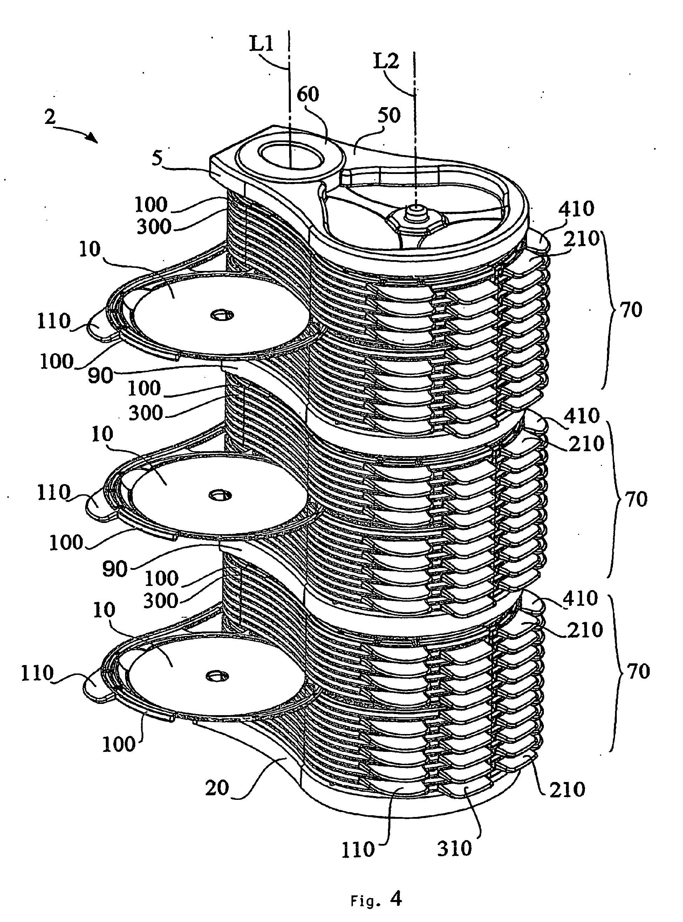

- Fig. 4: die axonometrische Projektion eines CD-Ordners 2,

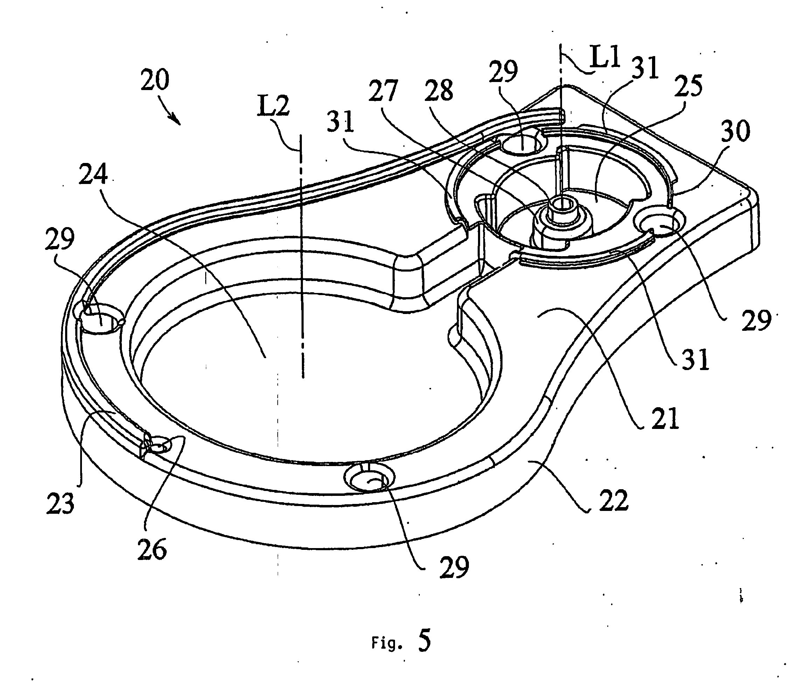

- Fig. 5: die axonometrische Projektion eines Untersatzes 20,

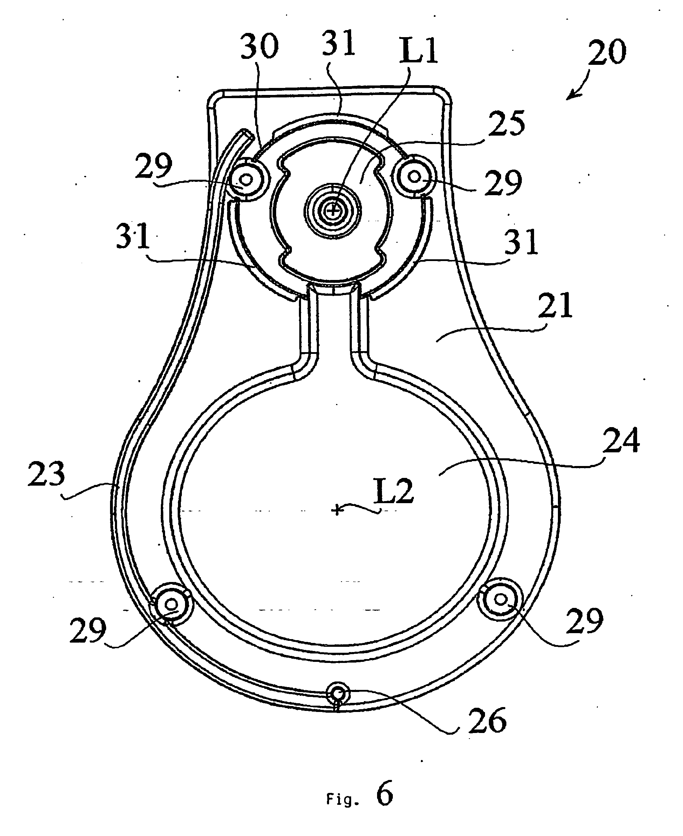

- Fig. 6: die Draufsicht auf den Untersatz 20,

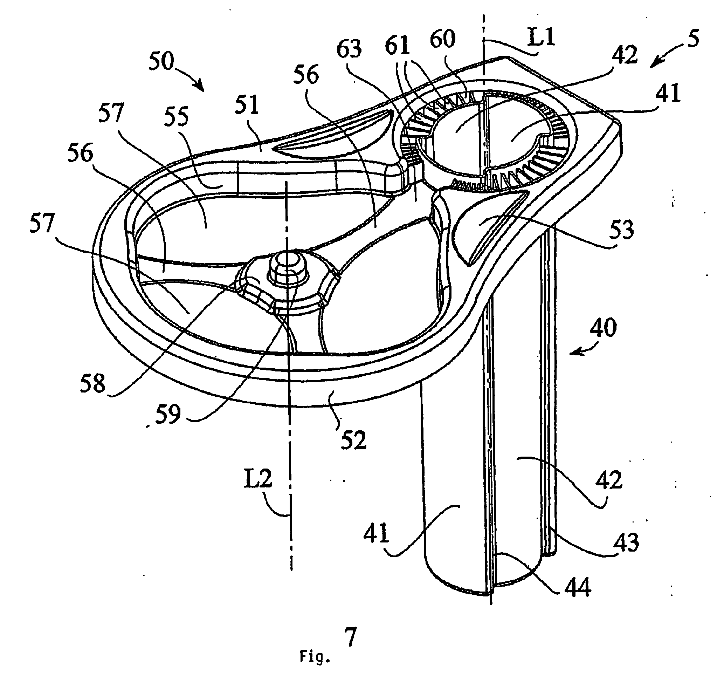

- Fig. 7: die axonometrische Projektion der Abdeckstütze 5, Draufsicht von rechts,

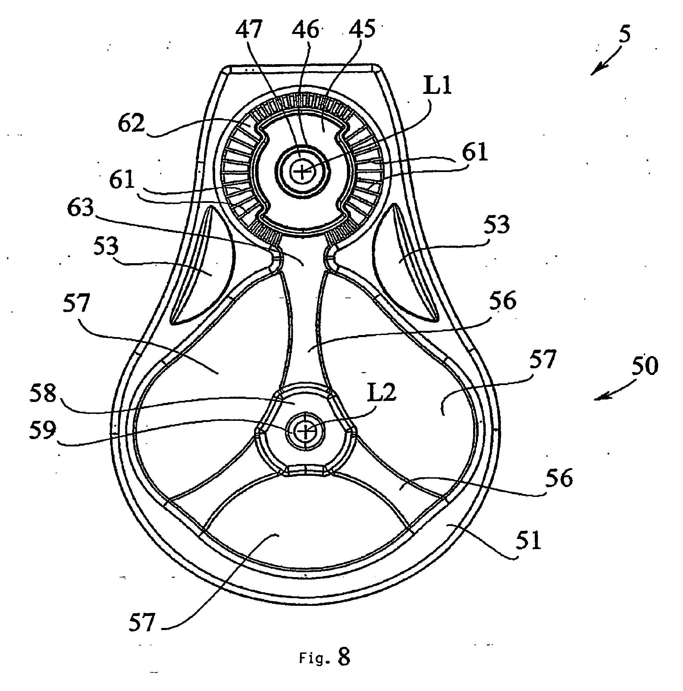

- Fig. 8: die Draufsicht auf die Abdeckstütze 5,

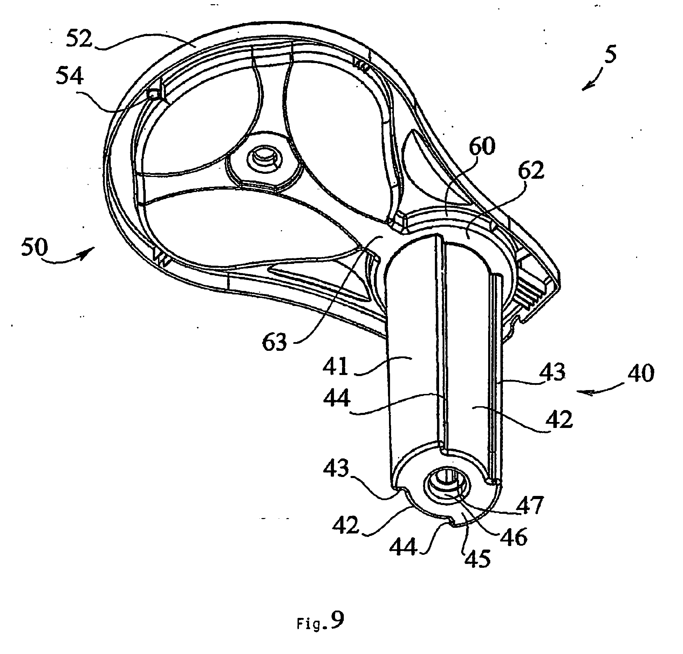

- Fig. 9: die Unteransicht von rechts der axonometrischen Projektion der Abdeckstütze 5,

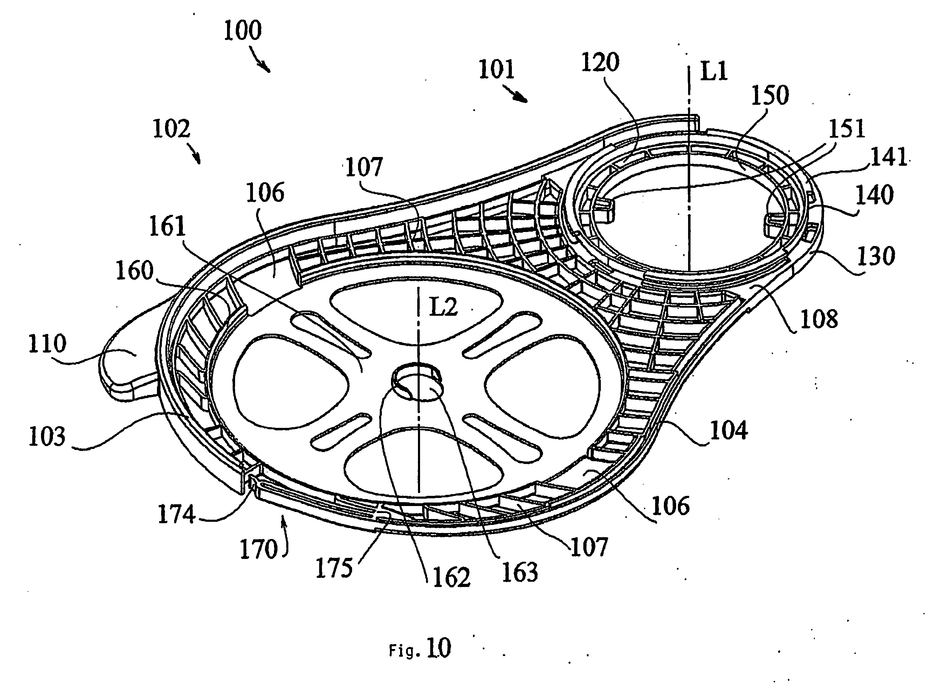

- Fig. 10: die axonometrische Projektion der Ablagen 100,

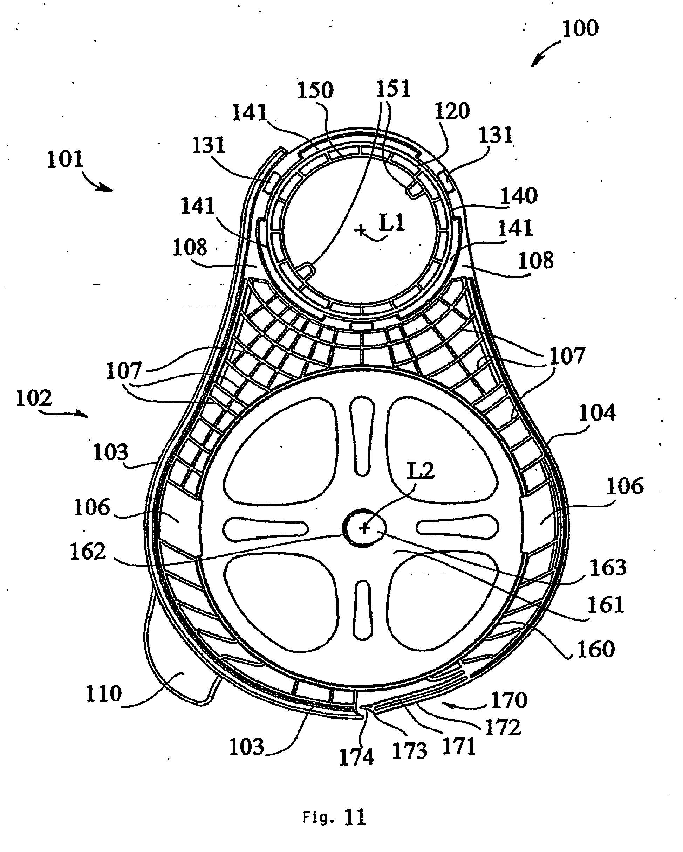

- Fig. 11: die Draufsicht auf die Ablage 100,

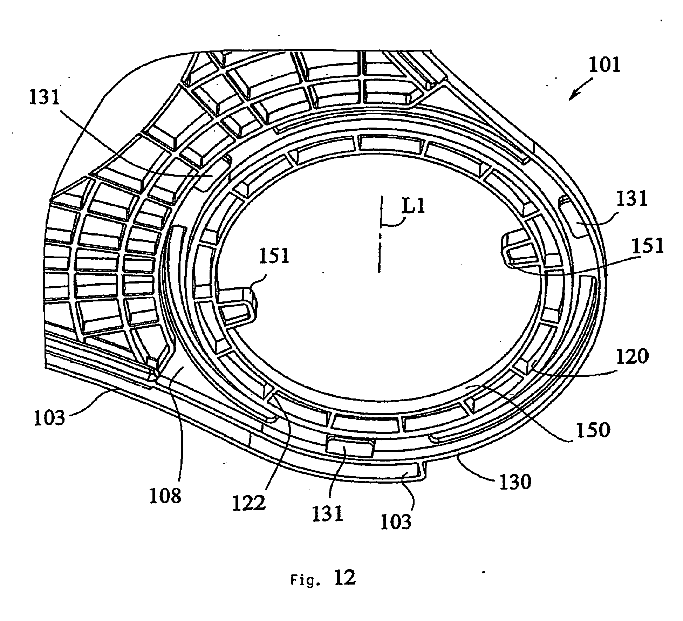

- Fig. 12: die Unteransicht der axonometrischen Projektion des engen Teils 101 der Ablage 100,

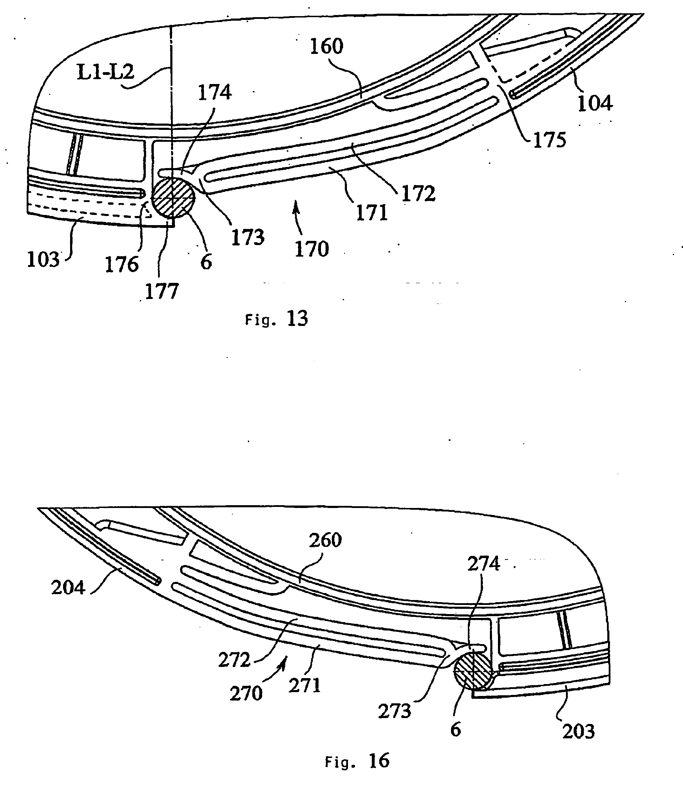

- Fig. 13: im Querschnitt die Draufsicht des elastischen Elements 170 der Ablage 100, welches mit der Sperrstütze 6 zusammenwirkt,

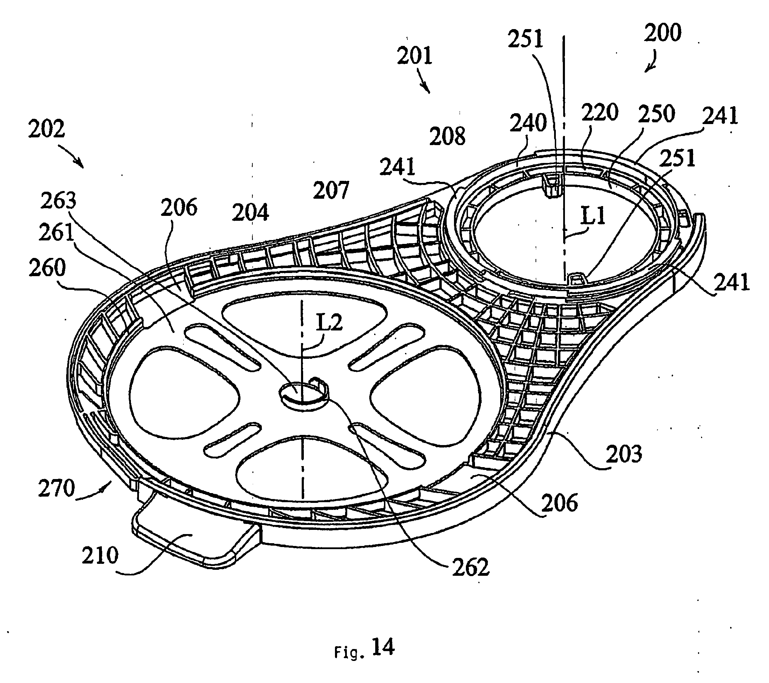

- Fig. 14: die axonometrische Projektion der Ablage 200,

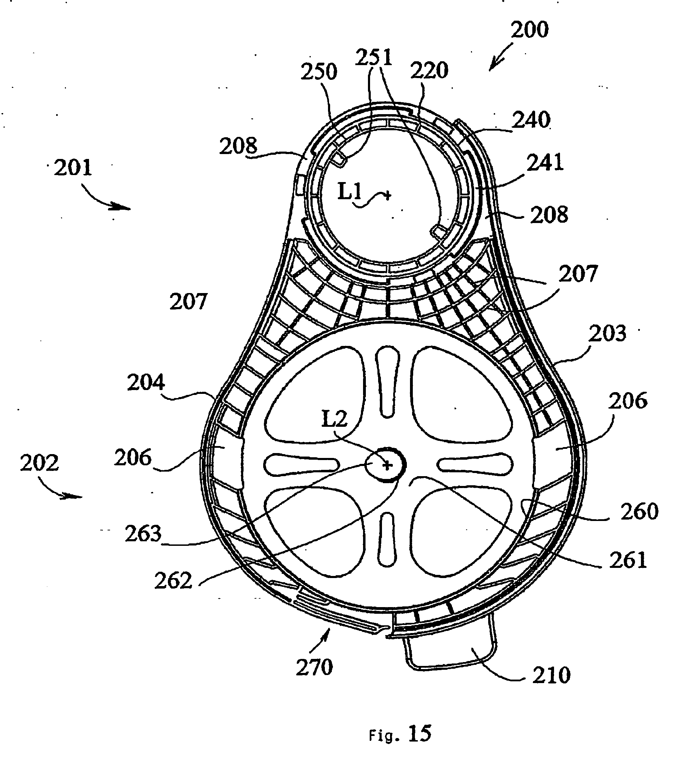

- Fig. 15: die Draufsicht der Ablage 200,
- Fig. 16: im Querschnitt die Draufsicht des elastischen Elements 270 der Ablage 200, welches mit der Sperrstütze 6 zusammenwirkt,

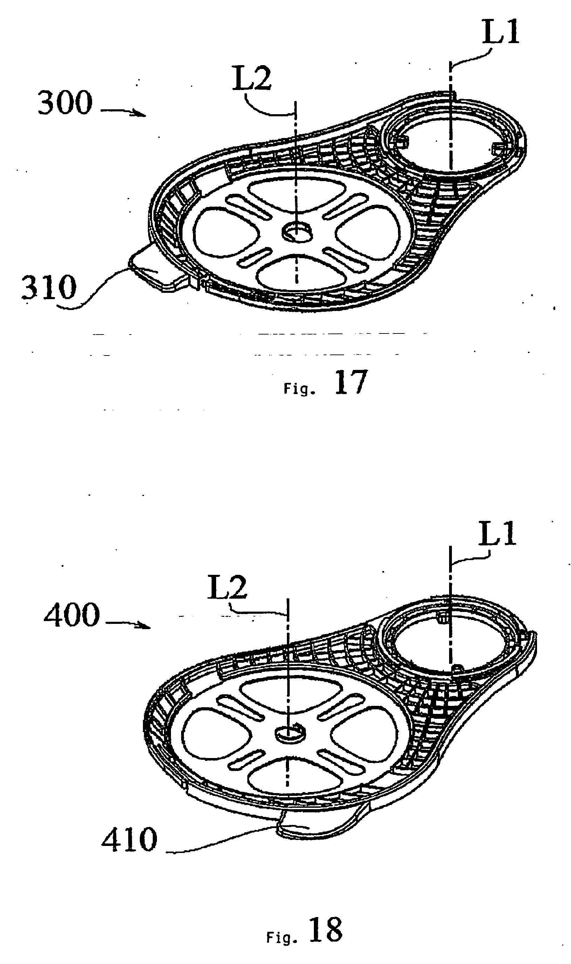

- Fig. 17: die axonometrische Projektion der Ablage 300,
- Fig. 18: die axonometrische Projektion der Ablage 400,

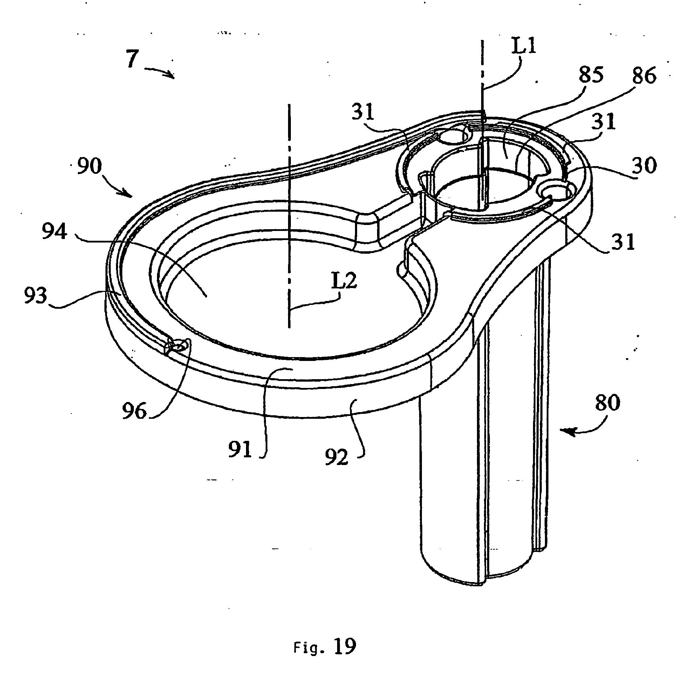

- Fig. 19: die Draufsicht auf die axonometrische Projektion der Einsatzstütze 7,

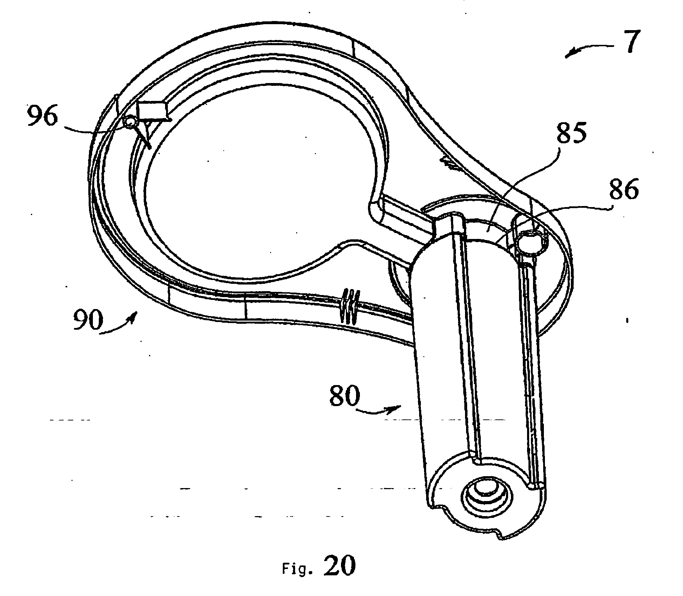

- Fig. 20: die Unteransicht von rechts auf die axonometrische Projektion der Einsatzstütze 7,

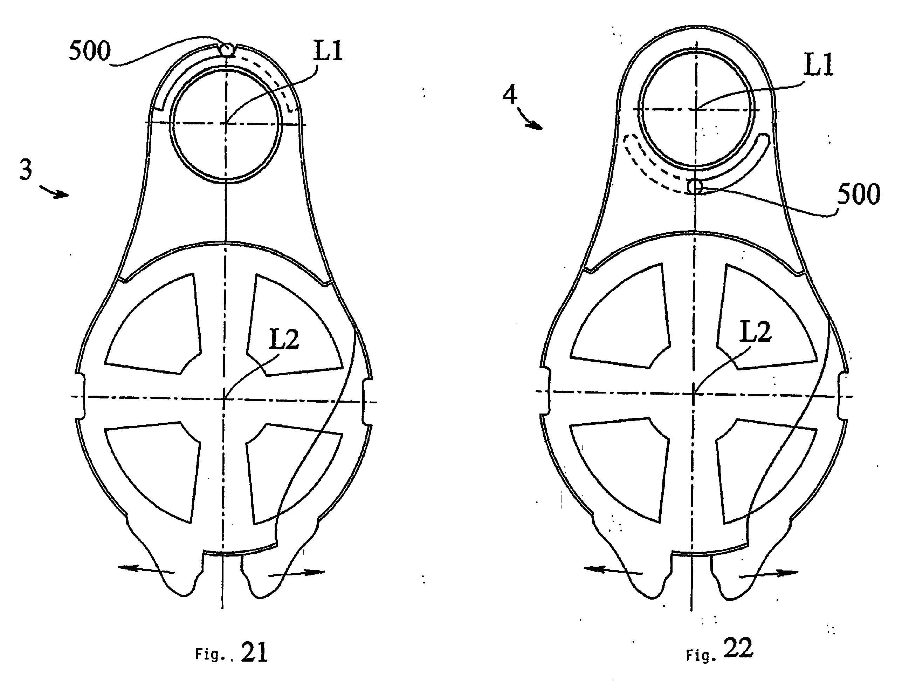

- Fig. 21: die Draufsicht der Nachbarablagen eines CD-Ordners 3 und eines Sperrelements 500, welches mit den Außenflächen der Ablagen im Kontakt steht. Die Außenflächen sind von der Achse L1 in die den CD-Aufnahmeflächen gegenüberliegende Richtung entfernt und
- Fig. 22: die Draufsicht der Nachbarablagen eines CD-Ordners 4. Die Kanten der Bohrungen in den Nachbarablagen stehen im Kontakt mit verschiedenen Seiten des Sperrelements 500, wobei das Sperrelement 500 in diese Bohrungen eingesetzt ist. Es ist ersichtlich, dass die Drehachse L1 der Ablagen außerhalb dieser Bohrungen verläuft.

Die Einrichtung (CD-Ordner) 1 enthält einen Untersatz 20, einen Stapel 70, eine Abdeckstütze 5, eine Sperrstütze 6 als ein Sperrelement und einen Becher 65. Der Stapel 70 besteht aus vierzig Ablagen 100, 200, 300 und 400. Die Abdeckstütze 5 weist eine Stütze 40 und einen Deckel 50 auf.

Der Stapel 70 der Ablagen 100, 200, 300 und 400 ist von oben auf den Untersatz 20 aufgestellt. Der Stapel 70 ist mit dem Untersatz 20 so gekoppelt, dass seine waagerechte Verschiebung begrenzt ist; dass ein Verfahren des Untersatzes 20 nach oben begrenzt ist; dass die untere Ablage 400 des Stapels 70 um eine Achse L1 drehbar ist und dass die Ablage 300 während der Drehung der Ablage 400 gegen diesen Untersatz 20 von oben anschlagen kann.

Die Abdeckstütze 5 ist von oben auf den Untersatz 20 aufgesetzt und ist dabei fest damit verbunden. Die Sperrstütze 6 ist mit dem Untersatz 20 und der Abdeckstütze 5 fest verbunden. Jede der Ablagen 100, 200, 300 oder 400 des Stapels 70 ist mit ihrer jeweilig benachbarten Ablage so verbunden, dass eine waagerechte Verschiebung begrenzt ist, dass ihre senkrechte Verschiebung voneinander begrenzt ist und dass die Drehbarkeit um die Achse L1 begrenzt ist.

Die Ablagen 100 und 300, die mit gleichen Ablagen 200 oder 400 benachbart sind, sowie Ablagen 200 und 400, die mit gleichen Ablagen 300 oder 100 benachbart sind, sind untereinander so verbunden, dass ein Anschlag sichergestellt ist. Der Anschlag begrenzt ihr Näherkommen, wenn die zwischen ihnen liegenden Ablagen 200 oder 400, 300 oder 100 gedreht werden. Jede der Ablagen 100, 200, 300 und 400 ist mit einer Stütze 40 der Abdeckstütze 5 so verbunden,
- dass der Anschlag gegen ihre Teile in der Grundstellung gesichert ist. Der Anschlag begrenzt die Drehung der Ablagen 100 und 300 entgegen dem Uhrzeigersinn und der Ablagen 200 und 400 im Uhrzeigersinn;
- dass der Anschlag gegen ihre Teile nach dem Drehen um einen Winkel gesichert ist, welcher für die Entnahme der CD 10 ausreicht.

Jede der Ablagen 100, 200, 300 und 400 in der Grundstellung steht mit der Sperrstütze 6 im Kontakt und zwar so, dass der hergestellte Anschlag eine Drehung um die Achse L1 begrenzt. Dabei begrenzt der Anschlag gegen die Sperrstütze 6 die Drehung der Ablagen 100 und 300 entgegen dem Uhrzeigersinn und der Ablagen 200 und 400 im Uhrzeigersinn.

Darüber hinaus steht jede der Ablagen 100, 200, 300 und 400 mit der Sperrstütze 6 so im Kontakt, dass die Sperrbarkeit ihrer Grundstellung im Stapel 70 sichergestellt ist.

Ein Becher 65 ist mit der Abdeckstütze 5 so verbunden, dass die Verfahrbarkeit in waagerechter Richtung, in senkrechter Richtung und die Drehbarkeit rings um die senkrechte Achse sichergestellt sind.

Der Untersatz 20 befindet sich im unteren Teil des CD-Ordners 1. Oben darauf sind der Stapel 70, die Abdeckstütze 5, die Sperrstütze 6 angeordnet. Der Becher 65 ist von oben in den Hohlraum der Abdeckstütze 5 eingesteckt. Die Abdeckstütze 5 hat unten eine Stütze 40. Die Ablagen 100, 200, 300 und 400 weisen Bohrungen auf, die entlang der Achse L1 ausgebildet sind. Die Stütze 40 ist von oben in diese Bohrungen eingesetzt. Die Abdeckstütze 5 weist oben einen Deckel 50 auf, welcher über dem Stapel 70 angeordnet ist. Die Ablagen 100, 200, 300 und 400 sind im Stapel 70 nacheinander abwärts in dieser Reihenfolge angeordnet und bilden somit einen Teil des Stapels 70. Das heißt, der Stapel 70 enthält zehn solcher Teile. Die Ablagen 100, 200, 300 und 400 sind so ausgebildet, dass die CDs 10 darin übereinander auf einer Achse L2 eingeordnet werden können, wobei die Achse L2 parallel zur Drehachse L1 der Ablagen verläuft.

Die Sperrstütze 6 ist als ein Stab mit Rundquerschnitt ausgebildet. Sie ist senkrecht zwischen dem Untersatz 20 und dem Deckel 50 an der Vorderkante (hier und nachfolgend beziehen sich die Begriffe, die mit der Richtung zu tun haben - vorne, hinten, links und rechts - auf die Ansicht von der Seite des Benutzers, d. h. von Achse L2 zu Achse L1) des CD-Ordners 1 so angeordnet, dass die Ebene L1 - L2 (die über die Achsen L1 und L2 verläuft) auch durch die Längsachse der Sperrstütze 6 verläuft. Anschlagbrücken 176 an den vorderen Enden von Anschlagbünden 103 der Ablagen 100 und 300 sowie von Endbrücken 273 von elastischen Elementen 270 der Ablagen 200 und 400 schließen sich an die Sperrstütze 6 links an. Anschlagbrücken 276 an den vorderen Enden von Anschlagbünden 203 der Ablagen 200 und 400 sowie Endbrücken 173 von elastischen Elementen 170 der Ablagen 100 und 300 schließen sich an die Sperrstütze 6 rechts an. Begrenzer 174 und 274 der Ablagen 100 und 300, 200 und 400 schließen sich an die Sperrstütze 6 hinten, das heißt seitens der Achse L1, an. Endvorsprünge 177 von senkrechten Außenteilen von Anschlagbünden 103 der Ablagen 100 und 300 schließen sich an die Sperrstütze 6 vorne links an. Endvorsprünge 277 von senkrechten Außenteilen der Anschlagbünde 203 der Ablagen 200 und 400 schließen sich an die Sperrstütze 6 vorne rechts an.

Die Einrichtung 1 ist in der Draufsicht in Tropfenform ausgebildet. Dabei ist der breite Teil des "Tropfens" vorne an der Seite des Benutzers um die Achse L2 und der verengte Teil hinten um die Achse L1 angeordnet. Dabei wiederholen sich die Konturen des Untersatzes 20 und des Deckels 50 der Abdeckstütze 5 und die Konturen der Ablagen 100, 200, 300 und 400 mit Ausnahme von den im vorderen breiten Teil des CD-Ordners vorragenden Griffen 110, 210, 310 und 410 der Ablagen 100, 200, 300 und 400.

Darüber hinaus enthalten die Außenkonturen des Untersatzes 20 und eines Deckels 50 im Unterschied zur gesamten Außenkontur der Ablagen 100, 200, 300 und 400 die hinten im engen Teil vorragenden Querflächen L1 - L2, die direkten Abschnitte, welche die Projektionen der flachen Oberflächen darstellen, wobei die flachen Oberflächen die hinteren Partien von Konturbünden 22 und 52 begrenzen, hintere Wände des Untersatzes 20 und des Deckels 50.

Die Griffe 110, 210, 310 und 410 der Ablagen 100, 200, 300 und 400 ragen außerhalb des Stapels 70 mit vier Vertikalreihen zum Benutzer hin hinaus. Die Griffe 110 der Ablagen 100 bilden eine erste Reihe links, und die Griffe 310 der Ablagen 300 bilden eine zweite Reihe links. Diese beiden Reihen sind links von der Ebene L1 - L2 angeordnet. Die rechten Kanten der Griffe 110 der Ablagen 100 sind von der Ebene L1 - L2 weiter entfernt als die linken Kanten der Griffe 310 der Ablagen 300. Der Abstand zwischen diesen Kanten ist so gewählt, dass zwei Finger in den Bereich dazwischen hineinpassen und dass der Griff 110 der Ablagen 100 an der rechten Kante gefasst werden kann. Der Abstand zwischen den Griffen 310 der Ablage 300 und der Achse L1 ist größer als der zwischen dieser Achse und den Griffen 110 der Ablagen 100. Der Unterschied zwischen diesen Abständen entspricht der Länge der Griffe 310 in radialer Richtung in Bezug auf die Achse L1. Die Griffe 210 der Ablagen 200 bilden eine dritte Reihe, und die Griffe 410 der Ablagen 400 bilden eine vierte Reihe links. Dabei sind diese zwei Reihen rechts von der Ebene L1 - L2 angeordnet. Die Griffe 210 von den Ablagen 200 sind von der Ebene L1 - L2 sowie der Achse L1 ebenso weit entfernt wie die Griffe 310 der Ablagen 300. Die Griffe 410 der Ablagen 400 sind von der Ebene L1 - L2 und der Achse L1 ebenso weit entfernt wie die Griffe 110 der Ablage 100. Der Abstand waagerecht von den rechten Kanten der Griffe 310 der Ablagen 300 bis zu den linken Kanten der Griffe 210 der Ablagen 200 ist so gewählt, dass die Finger des Benutzers zwischen diesen Kanten hineinpassen können, um an einer beliebigen Kante fassen zu können.

Der Stapel 70 der Ablagen 100, 200, 300 und 400 ist mit dem Untersatz 20 verbunden und zwar dank der Kopplung zwischen dem Untersatz 20 und der unteren Ablage 400 im Stapel 70 und dank dem oberen Anschlag der Ablagen 300 gegen den Anschlagbund 23 des Untersatzes 20, wenn die Ablagen 400 gedreht werden. Die Ablage 400 ist mit dem Untersatz 20 dadurch verbunden, dass die zylinderförmige Außenfläche, die konzentrische Achse L1, ihr mittlerer Ring 420 durch eine zylinderförmige Innenfläche des ihr entgegen emporragenden Sperrrands 30 des Untersatzes 20 umfasst werden.

Darüber hinaus ist die Ablage 400 mit dem Untersatz 20 verbunden, indem drei untere Haken 431 in drei Haken 31 eingreifen. Die unteren Haken 431 ragen von einem Außenring 430 der Ablage zur Achse L1 hervor. Die drei Haken 31 ragen vom Sperrrand 30 des Untersatzes 20 zur Achse L1 hin hervor und sind oberhalb der Haken 431 des Außenrings 430 der Ablagen 400 angeordnet.

Die Abdeckstütze 5 ist mit dem Untersatz 20 dadurch verbunden, dass die Außenfläche des unteren Teils der Stütze 40 durch die ihr formengleiche Oberfläche der Aufnahmestelle für eine Stütze 25 des Untersatzes 20 umfasst wird.

Darüber hinaus ist die Abdeckstütze 5 mit dem Untersatz 20 durch das Auswalzen des oberen Teils eines Befestigungsbundes 28 des Untersatzes 20 verbunden, nachdem die Stütze 40 in die Aufnahmestelle 25 des Untersatzes 20 eingebaut worden ist. Vor dem Auswalzen ragt der obere Teil des Befestigungsbundes 28 des Untersatzes 20 nach oben hervor - durch die Bohrung in einer waagerechten Brücke 47 einer Befestigungsbuchse 46 der Stütze 40 über der Oberfläche dieser waagerechten Brücke 47. Nach dem Auswalzen wird der ausgewalzte Teil des Befestigungsbundes 28 des Untersatzes 20 an die Oberfläche der waagerechten Brücke 47 angedrückt und verhindert so eine Verschiebung der Stütze 40 nach oben.

Die Sperrstütze 6 ist mit dem Untersatz 20 dadurch verbunden, dass ihr unteres Ende durch die Aufnahmestelle für die Sperrstütze des Untersatzes 26 umfasst wird. Die Sperrstütze 6 ist auch mit der Abdeckstütze 5 dadurch verbunden, dass ihr oberes Ende durch die Aufnahmestelle für die Sperrstütze des Deckels 54 umfasst wird.

Die Ablagen 100, 200, 300 und 400 sind mit ihren unteren Nachbarablagen 200, 300, 400 und 100 dadurch verbunden, dass die mit der Achse L1 konzentrischen zylinderförmigen- Außenflächen ihrer mittleren Ringe 120, 220 durch zylinderförmige Innenflächen der zu ihnen emporragenden ringförmigen Ränder 240 und 140 der Nachbarablagen 200, 300, 400 und 100 umfassen werden.

Darüber hinaus sind die Ablagen 100, 200, 300 und 400 mit ihren unteren Nachbarablagen 200, 300, 400 und 100 dadurch verbunden, dass untere Haken 131, 231 in obere Haken 241 und 141 eingreifen. Die unteren Haken 131, 231 ragen von den Außenringen 130, 230 der Ablagen zur Achse L1 hinaus. Die oberen Haken 241 und 141 ragen an ringförmigen Rändern 240 und 140 der Ablagen 200, 300, 400 und 100 zur Achse L1 hervor und sind über den Haken 131, 231 der Außenringe 130, 230 der Ablagen 100, 200, 300 und 400 angeordnet.

Die Ablagen 100 und 300 sowie 200 und 400 sind untereinander so verbunden, dass der Anschlag gegen die Anschlagbünde 103 und 203 gesichert ist. Dieser Anschlag begrenzt dementsprechend das Näherkommen der Ablagen entlang an der Achse L1.

Die Anschlagbünde 103 und 203 der Nachbarablagen sind so ausgebildet, dass ein Anschlag gegeneinander ermöglicht ist. Die Anschlagbünde 103 und 203 schlagen gegeneinander mit ihren hinteren Enden nach einer relativen Drehung dieser Ablagen aus der Grundstellung an. Dies ermöglicht den Zusammenbau der Ablagen untereinander und ist vor dem Zusammenbau mit der Stütze 40 erforderlich. Die relative Drehung erfolgt um einen Winkel, der einerseits größer ist als der durch den Anschlag der Ablagen gegen die Stütze 40 begrenzte Drehwinkel, und der andererseits den Drehwinkel überschreitet, welcher erforderlich ist, um die oberen Haken 141, 241 und die unteren Haken 131, 231 dieser Ablagen in Eingriff zu bringen.

Die Ablagen 100 und 300 sind mit der Stütze 40 der Abdeckstütze 5 mittels eines Anschlags der radialen Vorsprünge 151 der Ablagen 100 und 300 in der Grundstellung gegen die Kanten 43 der Langlöcher der Stütze 40 der Abdeckstütze 5 verbunden. Nach der Drehung der Ablagen 100 und 300 im Uhrzeigersinn in der Draufsicht um den Winkel, welcher für die Entnahme der CDs 10 erforderlich ist, erfolgt ein Anschlag gegen die entgegengesetzten Kanten 44 dieser Langlöcher.

Die Ablagen 200 und 400 sind mit der Stütze 40 der Abdeckstütze 5 mittels eines Anschlags der radialen Vorsprünge 251 der Ablagen 200 und 400 verbunden: In der Grundstellung erfolgt der Anschlag gegen die Kanten 44 derselben Langlöcher. Nach der Drehung der Ablagen 200 und 400 entgegen dem Uhrzeigersinn in der Draufsicht um den Winkel, welcher für die Entnahme der CDs 10 erforderlich ist, erfolgt ein Anschlag an den-entgegengesetzten-Kanten 43 dieser Langlöcher.

Die Ablagen 100, 200, 300 und 400 sind mit der Sperrstütze 6 so verbunden, dass der Anschlag der der Ebene L1 - L2 zugewandten Anschlagbrücken 176 links und 276 rechts gegen die zwei gegenüberliegenden Seiten der Sperrstütze 6 ermöglicht ist. Die Anschlagbrücken 176 links und 276 rechts sind an den vorderen Enden der Anschlagbünde 103 und 203 angeordnet.

Darüber hinaus sind die Ablagen 100, 200, 300 und 400 mit der Sperrstütze 6 so verbunden, dass ihre Position im Stapel 70 gesperrt werden kann. Die Sperrung erfolgt mittels des Anschlags der Endbrücken 173 und 273 und der Begrenzer 174 und 274 gegen die Seitenfläche der Sperrstütze 6. Die Endbrücken 173 und 273 liegen an freien Enden der elastischen Elemente 170 und 270 dieser Ablagen. Die Begrenzer 174 und 274 ragen an diesen freien Enden hervor und sind im Kontakt mit der Sperrstütze 6 seitens der Achse L1, so dass die Verschiebung der Begrenzer 174 und 274 von der Achse L1 begrenzt ist.

Dabei sind die elastischen Elemente 170 und 270 mit einer solchen Form ausgebildet, dass die Sperrstütze 6 in der Grundstellung der Ablagen 100, 200, 300 und 400 auf die Begrenzer 174, 274 in radialer Richtung zur Achse L1 einwirkt. Dank dieser Einwirkung sind die elastischen Elemente 170 und 270 im vorgespannten, gebogenen Zustand. Dabei werden die Formen und die gegenseitige Anordnung der zusammenwirkenden Oberflächen so gewählt, dass der zur Achse L1 gerichtete Radialbestandteil der Reaktionskraft für das Biegen des elastischen Elements 170 oder 270 ausreichend ist. Die Reaktionskraft seitens der Sperrstütze 6 wirkt auf die Endbrücke 173 oder 273 jeder Ablage 100, 200, 300 oder 400 ein, wenn versucht wird, diese Ablage zu drehen.

Die Ausführung der Einrichtung 1 ermöglicht ihre Aufstellung auf einer waagerechten Oberfläche, z. B. auf einem Tisch. Die Ausführung der Einrichtung 1 ermöglicht auch ihre Befestigung auf einer senkrechten Oberfläche, z.B. an der Wand. Dafür dienen die Löcher an den hinteren Wänden des Untersatzes 20 und des Deckels 50 mittels Befestigungselementen.

Der Untersatz 20 ist als ein dünnwandiger Kunststoffbauteil ausgebildet. Er enthält eine Grundplatte 21, einen Konturbund 22, einen Anschlagbund 23, eine Vertiefung 24, eine Aufnahmestelle für die Stütze 25, eine Aufnahmestelle für die Sperrstütze des Untersatzes 26, eine Aufnahmestelle für die Halterung 27, einen Befestigungsbund 28, vier Aufnahmestellen für Antirutschelemente 29, einen Sperrrand 30, drei Haken 31 und Versteifungsrippen 32.

Die waagerechte Grundplatte 21 ist mit der Oberfläche der Platte ausgebildet. Die Platte ist mit dem Konturbund 22, mit dem Anschlagbund 23, mit der Aufnahmestelle für die Stütze 25, mit der Aufnahmestelle für die Sperrstütze des Untersatzes 26, mit der Wand der Vertiefung 24, mit den Aufnahmestellen für die Antirutschelemente 29, mit den Versteifungsrippen 32 und mit dem Sperrrand 30 verbunden. Der Konturbund 22 ist mit dem Anschlagbund 23 und den Versteifungsrippen 32 verbunden. Die Aufnahmestelle für die Stütze 25 ist mit der Aufnahmestelle für die Halterung 27 verbunden. Die Aufnahmestelle für die Halterung 27 ist mit dem Befestigungsbund 28 verbunden. Der Sperrrand 30 ist mit den Haken 31 gekoppelt. Der Konturbund 22 ist als ein dünnwandiger Streifen ausgebildet, welcher entlang der Kante der Grundplatte Platte 21 gebogen ist. Der Konturbund 22 ragt an der Grundplatte 21 nach unten hervor. Der Anschlagbund 23 ragt am Konturbund 22 und an der Grundplatte 21 im linken Teil des Untersatzes 20 nach oben hervor. Er ist als ein P-förmiges Element ausgebildet, welches entlang an der linken Kante der Grundplatte 21 gebogen ist. Die untere Kante der senkrechten Außenpartie dieses Elements ist mit der oberen Kante des Konturbundes 22 verbunden. Die untere Kante der senkrechten Innenpartie dieses Elements ist mit der Kante der Grundplatte 21 verbunden. Die Höhe des Anschlagbundes 23 an der oberen Ebene der Grundplatte 21 entspricht der Höhe des Konturbundes 204 der Ablage 400, ohne sie zu überschreiten. Die innere Seitenfläche der senkrechten Innenpartie des Anschlagbundes 23 umfasst von außen den Konturbund 204 der Ablage 400. Die Länge des Anschlagbundes 23 im vorderen Teil des Untersatzes 20 ist durch die Aufnahmestelle für die Sperrstütze des Untersatzes 26 und durch die Ebene L1 - L2 begrenzt. Im hinteren Teil ist sie durch die Querbrücke begrenzt. Die Querbrücke steht von der Ebene L1 - L2 um einen Abstandswinkel ab, welcher von der Achse L1 gemessen ist. Dieser Abstandswinkel ist gleich oder größer als die Hälfte des Drehwinkels der Ablage 400, bis die unteren Haken 231 der Ablage 400 außer Eingriff mit den oberen Haken 31 des Untersatzes 20 gebracht sind. Die Vertiefung 24 um die Achse L2 ist durch die von oben offene Oberfläche des Elements in Form von einem Becher mit zylinderförmiger Wand konzentrisch zur Achse L2 und durch den flachen Boden ausgebildet. Die Aufnahmestelle für die Stütze 25 ragt an der Grundplatte 21 nach unten um die Achse L1 hervor. Die Aufnahmestelle für die Stütze 25 ist durch die von oben offene Oberfläche des Elements in Form von einem Becher mit senkrechter Wand und dem flachen Boden gebildet. Die Seitenfläche der Aufnahmestelle für die Stütze 25 ist äquidistant zur äußeren Seitenfläche des unteren Endes der Stütze 40 ausgebildet. Die Aufnahmestelle für die Halterung 27 ragt nach oben am Boden der Aufnahmestelle für die Stütze 25 hervor. Die Aufnahmestelle für die Halterung 27 ist durch die unten offene Oberfläche des Elements in Form von einem Becher mit zylinderförmiger Wand konzentrisch mit der Achse L1 und durch den flachen Rundboden mit einer Bohrung in der Mitte ausgebildet. Der Befestigungsbund 28 ist als ein Ring ausgebildet und ragt nach oben an der Kante dieser Bohrung konzentrisch mit der Achse L1 hervor. Die Aufnahmestelle für die Sperrstütze des Untersatzes 26 ragt nach unten an der Grundplatte 21 an der vorderen Kante des Untersatzes 20 im Zwischenraum zwischen dem Konturbund 22 und der Vertiefung 24 hervor. Die Aufnahmestelle für die Sperrstütze des Untersatzes 26 ist durch die oben offene innere Oberfläche des Elements in Form von einem Becher ausgebildet. Die Seitenfläche der Aufnahmestelle für die Sperrstütze des Untersatzes 26 ist zylinderförmig und konzentrisch zur senkrechten Achse ausgebildet, die in der Ebene L1 - L2 liegt. Die Aufnahmestellen für die Antirutschelemente 29 ragen an der Grundplatte 21 nach unten neben dem Konturbund 22 hervor. Der Sperrrand 30 ragt an der Grundplatte 21 um die Achse L1 nach oben hervor. Drei Haken 31 sind im gleichen Abstand am Kreisumfang angeordnet und ragen an der oberen Kante des Sperrrandes 30 nach außen, das heißt, an der Achse L1 hervor. Der Sperrrand 30 ist als ein zylinderförmiger Ring ausgebildet, welcher konzentrisch zur Achse L1 angeordnet ist. Jeder Haken 31 ist als eine Platte in Form von einem Zirkelabschnitt bei der Draufsicht ausgebildet.

Die Abdeckstütze 5 ist als ein dünnwandiger Kunststoffbauteil ausgebildet und weist unten eine Stütze 40 und oben einen Deckel 50 auf. Das obere Ende der Stütze 40 ist mit dem Boden 62 der Verbindungsstelle mit der Stütze sowie mit den Versteifungsrippen 61 der Verbindungsstelle mit der Stütze im Deckel 50 gekoppelt. Die Stütze 40 ist als ein von oben offener Becher ausgebildet. Sie weist eine Wand und einen damit fest verbundenen Boden auf. Die Wand der Stütze 40 enthält zwei Teile 42, die konzentrisch zur Achse L1 sind und symmetrisch zur Ebene L1 - L2 angeordnet sind, sowie zwei Teile 41, die konzentrisch zur Achse L1 und symmetrisch zur Ebene angeordnet sind, welche durch die Achse L1 normal zur Ebene L1 - L2 verläuft. Dabei sind die Teile 41 von der Achse L1 weiter entfernt, als die Teile 42. Die Oberflächen dieser Teile sind kegelförmig ausgebildet. Dabei reicht die verfahrenstechnische Neigung dafür aus, die Abdeckstütze 5 einer Pressform zu entnehmen. Durch die Richtung dieser Neigung nimmt die Länge der Stütze in der Querrichtung abwärts ab. Darüber hinaus weist die Wand der Stütze 40 radiale Brücken 43 und 44 auf, die als enge Streifen ausgebildet sind. Die Streifen sind entlang der Achse L1 angeordnet. Die Kanten der Streifen sind mit den Kanten der Teile 41 und 42 verbunden. Die Oberflächen der radialen Brücken 43 und 44 sind in den senkrechten Ebenen ausgebildet. Somit bildet die Außenfläche des zur Achse L1 näher liegenden Teils 42 den Boden des Langlochs, und die Außenflächen der mit diesem Teil verbundenen radialen Brücken 43, 44 bilden die Kanten dieses Lochs. Die Länge des Lochs in der Kreisrichtung entspricht der Länge des radialen Vorsprungs 151 oder 152 der Ablagen 100, 200, 300 oder 400 in der Kreisrichtung, welcher in dieses Loch eingesteckt wird. Sie entspricht auch der Länge des Weges, welchen dieser Vorsprung beim Drehen der Ablagen durchmacht, wenn er sich von einer Kante des Lochs zur anderen bewegt. Der Boden der Stütze 40 enthält die waagerechte Platte 45 und die Befestigungsbuchse 46. Die Außenkante der Platte 45 ist mit der Wand der Stütze fest verbunden. Der Zentralteil der Platte 45 ist mit der Befestigungsbuchse 46 verbunden. Die untere Kante der Befestigungsbuchse 46 ist mit der Platte 45 verbunden und ragt davon nach oben hervor. Die Platte 45 ist an ihrer Außenkante durch die Wand der Stütze 40 und in der Mitte durch die Befestigungsbuchse 46 begrenzt. Die Befestigungsbuchse 46 ist seitlich durch die zylinderförmigen Oberflächen begrenzt, die konzentrisch zur Achse L1 sind. Im oberen Teil der Befestigungsbuchse 46 gibt es eine waagerechte Brücke 47 mit einer Bohrung in der Mitte. Dabei ragt die obere Kante der Befestigungsbuchse 46 über die Oberfläche der waagerechten Brücke 47 hervor. Der Deckel 50 hat eine waagerechte Platte 51, einen Konturbund 52, eine CD-Auflagefläche des Deckels, eine Verbindungsstelle mit der Stütze, eine Aufnahmestelle für die Sperrstütze des Deckels 54, Versteifungsrippen. Die Platte 51 des Deckels ist mit dem Konturbund 52, der Wand 55 der CD-Auflagefläche des Deckels, der Wand 60 der Verbindungsstelle mit der Stütze und mit der Buchse, die die Aufnahmestelle für die Sperrstütze begrenzt sowie mit den Versteifungsrippen fest verbunden. Der Konturbund 52 des Deckels ist mittels der senkrechten Versteifungsrippen mit der Wand 55 der CD-Auflagefläche des Deckels, mit der Wand 60 der Verbindungsstelle mit der Stütze, mit der Buchse, die die Aufnahmestelle für die Sperrstütze 54 des Deckels begrenzt, fest verbunden. Die Wand 55 der CD-Auflagefläche des Deckels ist mit der Wand 60 der Verbindungsstelle mit der Stütze mittels der U-förmigen Brücke 63 verbunden. Die Wand 55 der CD-Auflagefläche des Deckels ist auch mit der Buchse, die die Aufnahmestelle für die Sperrstütze 54 des Deckels begrenzt, mittels der Versteifungsrippen verbunden. Die Platte 51 des Deckels ist waagerecht und symmetrisch zur Ebene L1 - L2 angeordnet. Sie enthält einen breiten Teil um die Achse L2 und einen schmalen Teil um die Achse L1. Der Konturbund 52 des Deckels ragt an der Kante der Platte 51 des Deckels nach unten hervor. Die CD-Auflagefläche des Deckels liegt in der Mitte des breiten Teils des Deckels 50 um die Achse L2 und ist seitlich durch die senkrechte Wand 55 und unten durch den damit verbundenen Bodenteil begrenzt. Die Wand 55 ragt an der Platte 51 des Deckels nach unten hervor. Die Wand 55 ist als ein gebogener Streifen ausgebildet. Der Abstand zwischen dem Streifen und der Achse L2 sollte dafür ausreichen, um in dem durch diese Wand 55 begrenzten Raum die CD 10 in waagerechter Position so zu legen, dass die Achse der CD mit der Achse L2 zusammenfällt. Der Abstand zwischen der Wand 55 und der Achse L2 in der Richtung senkrecht zur Ebene L1 - L2 und in der Richtung von der Achse L2 zur Achse L1 reicht dafür aus, die Finger auf der Kante der CD 10 so anzuordnen, dass die CD gut entnehmbar ist. Der Bodenteil der CD-Auflagefläche des Deckels enthält eine waagerechte Auflageplatte 56 mit drei Vertiefungen 57 an den Rändern. Der Bodenteil enthält auch eine in der Mitte angeordnete Sperre für die CD. Die Sperre enthält einen von der Auflageplatte 56 nach oben hervorragenden unteren Trägerteil 58 und eine obere Sicherung 59. Der Trägerteil 58 enthält oben eine waagerechte Auflageplatte für die CD. Die Sicherung 59 in Form von einem umgekippten Becher ragt aus der Mitte der Auflageplatte hervor. Die äußere Seitenfläche der Sicherung 59 ist zylinderförmig und konzentrisch zur Achse L2 ausgebildet. Die äußere Seitenfläche der Sicherung 59 ist von dieser Achse um einen Abstand entfernt, welcher dafür ausreicht, dass das Innenloch der CD 10 sie umfasst. Die Verbindungsstelle mit der Stütze enthält eine Wand der Verbindungsstelle mit der Stütze 60, einen mit ihrer unteren Kante verbundenen Boden der Verbindungsstelle mit der Stütze 62 und die damit verbundenen Versteifungsrippen der Verbindungsstelle mit der Stütze 61. Die obere Kante der Wand der Verbindungsstelle mit der Stütze 60 ist mit der waagerechten Platte 51 des Deckels verbunden. Der Boden der Verbindungsstelle mit der Stütze 62 ist mit einer Bohrung versehen. Das obere Ende der Stütze 40 tritt durch diese Bohrung heraus. Das obere Ende der Stütze 40 ist mit den Versteifungsrippen der Verbindungsstelle mit der Stütze 61 verbunden. Die Versteifungsrippen der Verbindungsstelle mit der Stütze 61 sind in Form von Platten ausgebildet, welche senkrecht und radial zur Achse L1 angeordnet sind. Die Aufnahmestelle für die Sperrstütze 54 des Deckels ragt an der waagerechten Platte 51 des Deckels nach unten hervor, und zwar an der vorderen Kante des Deckels 50 im Zwischenraum zwischen dem Konturbund 52 und der Wand 55 der CD-Auflagefläche. Die Aufnahmestelle für die Sperrstütze 54 des Deckels ist durch die unten offene innere Oberfläche des Elements in Form der zylinderförmigen Buchse mit senkrechter Achse ausgebildet, wobei die Achse in der Ebene L1 - L2 liegt.

Der Becher 65 ist als ein dünnwandiges Kunststoffbauteil ausgebildet. Der Becher 65 enthält eine vertikale Wand 66, deren Seitenfläche in Form eines elliptischen Zylinders ausgebildet ist. Unten sind ein flacher waagerechter Boden und oben ein flacher waagerechter Rundflansch 67 sowie eine Zunge 68 angeordnet, welche an der vorderen Flanschkante nach unten hervorragt. Die Länge von dem Flansch 67 reicht dafür aus, um die Versteifungsrippen der Verbindungsstelle des Deckels 50 der Abdeckstütze 5 mit der Stütze abzudecken. Die Zunge 68 ist so ausgebildet, dass sie ihre Anordnung in der U-förmigen Brücke 63 des Deckels 50 ermöglicht.

Die Ablage 100 ist als ein dünnwandiges Kunststoffbauteil mit Außenkontur in Tropfenform ausgebildet. Die Ablage 100 enthält einen schmalen Teil 101 rings um die senkrechte Achse L1 und einen breiten Teil 102 um die senkrechte Achse L2. Die Ablage 100 enthält in ihrem breiten Teil eine Auflagefläche für die CD, einen Anschlagbund 103, einen Griff 110, einen Konturbund 104, ein elastisches Element 170, zwei Bohrungen für das Ergreifen der CD 106 und Versteifungsrippen 107. Die Ablage 100 enthält in ihrem schmalen Teil einen Anschlagbund 103, einen Konturbund 104, eine waagerechte Brücke 108, einen Außenring 130, drei untere Haken 131, einen mittleren Ring 120, einen Innenring 150, zwei radiale Vorsprünge 151, einen ringförmigen Rand 140, drei obere Haken 141 und Versteifungsrippen 121.

Die Auflagefläche für die CD enthält eine Auflageplatte 161 und Elemente, die die Verschiebung von CDs begrenzen, und zwar den Außensperrbund 160 und den Innensperrbund 162. Der Außensperrbund 160 der Auflagefläche für die CD ist innenseitig mit der Auflageplatte 161 und außenseitig mit den Versteifungsrippen 107 verbunden. Der Anschlagbund 103 ist mit der Längsversteifungsrippe, dem Griff 110, der waagerechten Brücke 108 und dem Außenring 130 verbunden. Der-Konturbund 104 ist mit den Versteifungsrippen 107, der waagerechten Brücke 108, mit der Brücke 175 und dem Außenring 130 verbunden. Die waagerechte Brücke 108 ist mit dem Außenring 130, dem Mittelring 120 und dem ringförmigen Rand 140 verbunden. Der Mittelring 120 ist mit dem Innenring 150 mittels radialer Brücken 122 gekoppelt. Der Außenring 130 ist mit drei unteren Haken 131 verbunden. Der Innenring 150 ist mit zwei radialen Vorsprüngen 151 verbunden. Der ringförmige Rand 140 ist mit den oberen Haken 141 verbunden.

Der Außensperrbund 160 der Auflagefläche für die CD, die Versteifungsrippen 107, der Konturbund 104, das elastische Element 170, der Außenring 130, der Mittelring 120, der Innenring 150 und zwei radiale Vorsprünge 151 sind mit gleicher Höhe ausgebildet und auf einem horizontalen Niveau angeordnet.

Die Auflagefläche für die CD ist in der Mitte des breiten Teils 101 der Ablage 100 angeordnet und von außen durch den Außensperrbund 160 begrenzt. Der Außensperrbund 160 ist als ein zylinderförmiger Ring konzentrisch zur Achse L2 ausgebildet. Die innere Oberfläche des Außensperrbundes 160 ist der Achse L2 zugewendet. Diese innere Oberfläche ist so ausgebildet, dass die Außenkante der CD 10 mit einem Spiel umfasst werden kann. Die Oberfläche des Außensperrbundes liegt in der waagerechten Ebene. Der Außensperrbund 160 hat zwei Trennstellen im Bereich der Anordnung von zwei Bohrungen zum Ergreifen der CD 106. Die Auflageplatte 161 ist durch die obere waagerechte Oberfläche der Platte ausgebildet. Die Platte liegt im unteren Teil der Auflagefläche für die CD. Die untere Oberfläche dieser Platte fällt mit der Ebene zusammen, welche die Ablage 100 von unten begrenzt. Der Innensperrbund 162 ist in Form von einem dünnwandigen Halbring ausgebildet. Der Innensperrbund 162 ist in der Mitte der Auflageplatte 161 in einer solchen Position angeordnet, in der seine Wölbung zur Seite des Austritts der Ablage 100 aus dem Stapel 70, das heißt nach links zugewendet ist. Die Außenfläche des inneren Sperrbundes 162 ist zylinderförmig und konzentrisch zur Achse 12 ausgebildet. Diese Ausbildung ermöglich es, dass die Außenfläche des inneren Sperrbundes 162 mit einem Spiel durch die Oberfläche umfasst wird, die das Loch der CD 10 ausbildet. Der Außensperrbund 160 und der Innensperrbund 162 ragen über die Auflageplatte 161 nach oben hervor. Die Platte, in deren Oberfläche die Auflageplatte 161 angeordnet ist, ist mit einer Zentralbohrung 163 der Auflageplatte versehen. Die Zentralbohrung ist seitens des inneren Sperrbundes 162 durch die zylinderförmige Oberfläche begrenzt, welche im oberen Teil dieser Platte mit der Oberfläche des inneren Sperrbundes 162 zusammenfällt. Die Zentralbohrung 163 ist an der Gegenseite durch die Oberfläche begrenzt, welche von der Achse L2 absteht. Dieser Abstand ist größer als der Radius des CD-Lochs 10 und reicht dafür aus, die Kante des CD-Lochs 10 mit dem Finger zu greifen.

Der Anschlagbund 103 begrenzt die Ablage 100 von links und ragt nach oben über der Oberfläche des Außensperrbundes 160 der Auflagefläche für die CD der Ablage 100 um die Höhe hervor, welche mit der Höhe des Konturbundes 204 der obigen Nachbarablage 400 übereinstimmt, ohne sie zu überschreiten. Der Anschlagbund 103 ist als ein im Querschnitt P-förmiges Element ausgebildet, welcher entlang am linken Teil der Außenkontur der Ablage 100 gebogen ist. Der äußere vertikale Teil dieses P-förmigen Elements ist oben mit dem senkrechten Innenteil mittels einer Brücke verbunden. Die untere Kante der senkrechten Innenpartie des Anschlagbundes 103 ist mit der unteren Kante der im Querschnitt P-förmigen Längsversteifungsrippe mittels der waagerechten Brücke verbunden. Die Innenfläche der senkrechten Innenpartie des Anschlagbundes 103 umfasst mit einem Spiel die Außenfläche des Konturbundes der obigen Nachbarablage 400. Der Anschlagbund 103 ist mit einer Anschlagbrücke 176 versehen. Die Anschlagbrücke ist an seinem von der Achse L1 entfernten Rand, d. h. an dem der Ebene L1 - L2 zugewandten vorderen Rand angeordnet. Der Anschlagbund 103 hat einen Endvorsprung 177, welcher die Verlängerung der senkrechten Außenpartie des Anschlagbundes 103 von der Anschlagbrücke 176 bis zur Ebene L1 - L2 darstellt.

Der Griff 110 ragt außerhalb der Ablage 100 von der senkrechten Außenpartie des Anschlagbundes 103 im vorderen linken Teil der Ablage 100 hervor. Der Griff 110 enthält einen flachen Oberteil und einen damit verbundenen Bord, welcher nach unten an der Kante des flachen Oberteils bis zum unteren waagerechten Niveau der Ablage 100 hervorragt. Der flache Oberteil ist so ausgebildet, dass die vorragende Kante nach unten geneigt ist. Die Vorderkante des Griffs 110 ist durch die Oberfläche begrenzt, welche entlang der Kreisrichtung zur Drehachse L1 der Ablage verläuft. Die rechte Kante des Griffs 110 ist durch die Oberfläche begrenzt, welche entlang der radialen Richtung zur Achse L1 verläuft. Die linke Kante des Griffs 110 liegt innerhalb der der Ebene L1 - L2 querliegenden Abmessungen der Ablage 100, das heißt innerhalb der Strecke von der linken Kante des Anschlagbundes 103 bis zur Ebene L1 - L2.

Der Konturbund 104 begrenzt die Ablage 100 von links. Er ist als ein im Querschnitt U-förmiges Element ausgebildet, welcher am rechten Teil entlang der Außenkontur der Ablage 100 gebogen ist. Der vertikale Außenteil des Elements ist mit dem vertikalen Innenteil mittels einer Brücke verbunden. Die Außenfläche ist mit dem vertikalen Innenteil mittels der senkrechten abgerundeten Außenbrücke verbunden. Die Außenfläche der senkrechten Außenpartie des Konturbundes 104 ist mit einem Spiel durch die Innenfläche der senkrechten Innenpartie des Anschlagbundes 203 der unteren Nachbarablage 200 umfasst.

Das elastische Element 170 enthält zwei elastische Teile - den Außenteil 171 und den Innenteil 172 -, die Endbrücke 173 und den Begrenzer 174. Die rechten Enden der elastischen Teile 171 und 172 sind mit der Brücke 175 fest verbunden. Die Brücke verbindet das vordere Ende des Konturbundes 104 mit dem Außensperrbund 160 der Auflagefläche für die CD. Die linken Enden der elastischen Teile 171 und 172 sind mit der Endbrücke 173 mit dem freien Ende des elastischen Elements 170 verbunden. Der Begrenzer 174 ist mit der Endbrücke 173 verbunden. Die elastischen Teile 171 und 172 sind nebeneinander an der Außenkontur entlang der Ablage 100 und an der vorderen Kante ihrer rechten Partie, in die Ausziehrichtung der Brücke 175 aus dem Stapel, d. h. nach rechts zur Ebene L1 - L2 gestreckt. Die elastischen Teile 171 und 172 sind in Form von Streifen ausgebildet, welche senkrecht und in gleichem Abstand zueinander angeordnet sind. Die Endbrücke 173 ist an die Enden der elastischen Teile 171 und 172 nahtlos angeschlossen. Sie weist die gleiche Höhe wie die elastischen Teile 171 und 172 auf. Die Endbrücke 173 ist als ein Streifen ausgebildet, welcher kreisförmig von einem Ende bis zum anderen gebogen ist. Der Begrenzer 174 ist als ein Streifen mit gleicher Höhe wie die der Endbrücke 173 ausgebildet. Der Begrenzer 174 ragt in der Mitte der Endbrücke 173 nach links außerhalb der Ebene L1 - L2 hervor. Die nach außerhalb der Ablage 100 gewendeten Oberflächen des Begrenzers 174 und der Endbrücke 173 sind mittels einer zylinderförmigen Oberfläche nahtlos miteinander gekoppelt.

Die Versteifungsrippen 107 sind in Form von senkrecht angeordneten Streifen ausgebildet. Sie verbinden den Außensperrbund 160 der Auflagefläche für die CD mit der Längsversteifungsrippe. Die Längsversteifungsrippe ist mit dem Anschlagbund 103 links vom breiten Teil 102 der Ablage 100, mit dem Konturbund 104 der rechten Partie der Ablage und mit dem Außenring 130 im schmalen Teil 101 der Ablage 100 verbunden.

Die zwei Bohrungen 106 für das Ergreifen der CD 10 sind am linken und am rechten Rand des breiten Teils 102 der Ablage 100 im Raum zwischen der CD-Auflagefläche und dem Anschlagbund 103 und im Raum zwischen der CD-Auflagefläche und dem Konturbund 104 ausgebildet. Die Bohrungen sind in Kreisrichtung zur Achse L2 durch die Versteifungsrippen 107 und in radialer Richtung zur Achse L2 durch die Kante der Auflageplatte 161 der Auflagefläche für die CD begrenzt. Die Länge der Bohrungen 106 reicht dafür aus, um durch diese Bohrungen die Außenkante der CD 10 mit den Fingern zu ergreifen.

Der Außenring 130 ist zylinderförmig ausgebildet und ist konzentrisch zur Achse L1 angeordnet. Der Außenring 130 schließt sich nahtlos an den senkrechten Innenteil des Anschlagbundes 103 im linken Teil der Ablage und an den senkrechten Außenteil des Konturbundes 104 im rechten Teil der Ablage an. Die obere Kante des Außenrings 130 schließt sich winkelrecht an die waagerechte Brücke 108 an.

Die unteren Haken 131 sind als schmale waagerechte Platten ausgebildet, die mit dem unteren Teil des Außenrings 130 verbunden sind. Dabei ragen die schmalen waagerechten Platten an der inneren zylinderförmigen Oberfläche in Richtung zur Achse L1 hervor. Die unteren Haken 131 weisen eine solche Höhe auf, dass sie in den freien Raum unter den oberen Haken 241 der Ablage 200 hineinpassen. Dabei sind sie mit einem solchen Abstand zur waagerechten Platte 104 ausgebildet, dass die oberen Haken 241 der Ablage 200 in den freien Raum darüber hineinpassen. Die unteren Haken 131 sind in Kreisrichtung gleichmäßig entlang der Kreislinie um die Achse L1 verteilt und zwar so, dass der zur Achse L2 am nächsten liegende Haken durch die Ebene L1 - L2 zweigeteilt wird. Die unteren Haken 131 sind in Bezug auf die oberen Haken 241 der Ablage 200 so angeordnet, dass jeder untere Haken 131 der Ablage 100 sich beim Drehen einer der Ablagen 100 oder 200 von einer Kante des oberen Hakens 241 der Ablage 200 zur anderen bewegt. Die Länge der unteren Haken 131 in Kreisrichtung ist kleiner ausgebildet als der Abstand zwischen den nächsten Kanten der oberen Haken 141 in derselben Richtung.

Der mittlere Ring 120 ist zylinderförmig ausgebildet und konzentrisch zum Außenring 130 und näher zur Achse L1 als der Außenring 130 angeordnet. Die zylinderförmige Außenfläche des mittleren Rings 120 ist so ausgebildet, dass sie samt dem Aufnahmespiel durch die Innenfläche des oberen Rings 240 der Ablage 200 umfasst werden kann. Dabei lässt das Aufnahmespiel eine relative Drehung der Ablagen 100 und 200 zu.

Der Innenring 150 ist zylinderförmig ausgebildet und konzentrisch zum mittleren Ring 120 und näher zur Achse L1 als der mittlere Ring 120 angeordnet. Der Innenring 150 ist mit dem Mittelring 120 mittels radialer Brücken 122 verbunden. Die radialen Brücken 122 sind gleichmäßig an der Kreislinie verteilt. Die radialen Brücken 122 sind als senkrecht angeordnete Platten ausgebildet. Die zwei radialen Vorsprünge 151 sind als in der Draufsicht P-förmige Elemente ausgebildet, die vom Innenring 150 zur Achse L1 einander entgegen hervorragen.

Der ringförmige Rand 140 ist zylinderförmig ausgebildet und konzentrisch zum mittleren Ring 120 angeordnet. Der Abstand des Rands 140 zur Achse L1 ist größer als der des mittleren Rings 120. Der ringförmige Rand 140 ragt nach oben über der Oberfläche der waagerechten Brücke 108 hervor. Der ringförmige Rand 140 ist so ausgebildet, dass seine zylinderförmige Innenfläche die Außenfläche des mittleren Rings 120 der Ablage 400 mit einem Spiel umfassen kann, wobei das Spiel für eine gegenseitige Drehung ausreicht.

Die drei obere Haken 141 sind in der Draufsicht in gleicher Form als schmale waagerechte Platten in Form von Zirkelabschnitten ausgebildet. Die oberen Haken 141 sind mit dem oberen Teil des oberen Ringes 140 verbunden und ragen dabei am oberen Ring 140 in Richtung weg von der Achse L1 hervor. Die die oberen Haken oben begrenzenden Oberflächen sowie die obere Stirnfläche des oberen Rings 140 sind in gleicher Ebene so ausgebildet, dass der Querschnitt des oberen Rings 140 samt dem oberen Haken 141 und der Ebene, die über die Achse L1 verläuft, die L-Form aufweist. Die oberen Haken 141 sind mit einer solchen Höhe ausgebildet, dass die Haken in den Raum über den unteren Haken 431 der Ablage 400 hineinpassen. Dabei reicht ihr Abstand von der waagerechten Platte 104 dafür aus, dass die unteren Haken 431 der Ablage 400 darüber hineinpassen. In der Kreisrichtung sind die oberen Haken 141 gleichmäßig entlang der Kreislinie um die Achse L1 verteilt. Dabei ist einer der oberen Haken 141 hinter dem schmalen Teil hinter der Achse L2 angeordnet. Er wird durch die Ebene L1 - L2 zweigeteilt. Die oberen Haken 141 sind in Bezug auf die unteren Haken 431 der Ablage 400 so angeordnet, dass, wenn eine der Ablagen 100 oder 400 gedreht wird, jeder untere Haken 431 der Ablage 400 sich von einer Kante des oberen Hakens 141 der Ablage 100 zur anderen bewegt.

Die waagerechte Brücke 108 ist als eine waagerecht angeordnete Platte ausgebildet, die von außen durch den Außenring 130 und innen durch den Mittelring 120 begrenzt ist. Die waagerechte Brücke 108 ist mit verfahrenstechnischen Bohrungen über den unteren Haken 131 und unter den oberen Haken versehen. Dabei stimmt die Form dieser Bohrungen mit diesen Haken 131 und 141 überein.

Die Ablage 300 enthält gleiche Elemente wie die Ablage 100. Sie unterscheidet sich von der Ablage 100 nur durch die Form und die Anordnung des Griffs 310. Der Griff 310 der Ablage 300 ragt ebenfalls außerhalb an der Ablage 300 hervor und zwar an der senkrechten Außenpartie des Anschlagbundes im linken vorderen Teil der Ablage 300, jedoch näher zur Ebene L1 - L2 als der Griff 110 der Ablage 100. Der Griff 310 enthält den flachen Oberteil und den damit verbundenen Bord, welcher an der Kante des flachen Oberteils bis zum unteren waagerechten Niveau der Ablage 100 hervorragt. Der flache Oberteil des Griffs 310 ist nach unten geneigt ausgebildet. Die Vorderkante des Griffs 310 ist durch die Oberfläche begrenzt, welche entlang der Kreisrichtung verläuft. Die linke, die rechte und die Seitenkante des Griffs 310 sind durch die Oberflächen begrenzt, die entlang der radialen Richtung in Bezug auf die Drehachse L1 der Ablage verläuft. Die Ablage 200 ist so ausgebildet, dass sie aus dem Stapel 70 mittels einer Drehung um die Achse L1 entgegen dem Uhrzeigersinn, d. h. in der der Ablage 100 entgegengesetzten Richtung herausfahrbar ist. Die Ablage 200 enthält folgende Elemente: die Auflagefläche für die CD, den Anschlagbund 203, den Konturbund 204, das elastische Element 270, zwei Bohrungen 206 zum Ergreifen der CD, Versteifungsrippen 207, die waagerechte Brücke 208, den Außenring 230, den mittleren Ring 220, den Innenring 250, zwei radiale Vorsprünge 251 und den ringförmigen Rand 240. Die Form und die Anordnung dieser Elemente können durch das Spiegelbild in Bezug auf die Ebene L1 - L2 der jeweiligen Elemente der Ablage 100 ermittelt werden. Die Ablage 200 enthält auch solche Elemente wie drei untere Haken 231 und drei obere Haken 241. Ihre Form und Anordnung in Bezug aufeinander sind mit der Form und der Anordnung der jeweiligen Elemente der Ablage 100 identisch. Die Anordnung dieser Elemente in Bezug auf die Achse L1 unterscheidet sich von der Anordnung der jeweiligen Elemente der Ablage 100 durch den Abstandswinkel in Bezug auf die Achse L1 entgegen dem Uhrzeigersinn. Der Abstandswinkel ist gleich dem Abstandswinkel zwischen der Mitte des Vorsprungs 131 und der zum Vorsprung 131 am nächsten liegenden Kante des Vorsprungs 141 des oberen Rings 140 der Ablage 100. Die Ablage 200 enthält auch den Griff 210, dessen Form und Anordnung aus der Form und Anordnung des Griffs 310 der Ablage 300 mittels ihrer Spiegelung in Bezug auf die Ebene L1 - L2 ermittelt werden können.

Die Ablage 400 enthält die gleichen Elemente wie die Ablage 200. Sie unterscheidet sich von der Ablage 200 nur durch die Form und die Anordnung des Griffs 410. Die Ablage 400 enthält den Griff 410, dessen Form und Anordnung aus der Form und Anordnung des Griffs 110 der Ablage 100 mittels ihrer Spiegelung in Bezug auf die Ebene L1 - L2 ermittelt werden können.

### Die Funktionsweise des CD-Ordners 1

Um die CD 10 in die Einrichtung 1 einzulegen, kann der Benutzer mit einer Hand hantieren. Dafür befestigt er zuerst die CD 10 auf dem Trägerteil 58 der Sicherung auf dem Deckel 50. Danach wählt der Benutzer den Griff 110, 210, 310 oder 410, deren Bezeichnung darauf hinweist, dass die Ablage 100, 200, 300 oder 400 nicht belegt ist. Z. B. wählt der Benutzer den Griff 110 der Ablage 100. In diesem Fall kann er einen Stift aus dem Becher 65 nehmen und den Griff 110 mit dem Titel oder einer sonstigen Bezeichnung der CD 10 beschriften. Danach betätigt der Benutzer den Griff 110 mit der Hand, indem er eine Kraft nach links anwendet. Diese Kraft wird auf den mittleren Ring 120 und auf den ringförmigen Rand 140 der Ablage 100 übertragen. Die Außenfläche des mittleren Rings 120 wirkt mit der Innenfläche des ringförmigen Rands 240 der unteren Nachbarablage 200 zusammen. Die Innenfläche des ringförmigen Rands 140 wirkt mit der Außenfläche des mittleren Rings 420 der oberen Nachbarablage 400 zusammen. Als Ergebnis fängt die Ablage 100 an, sich um die Achse L1 im Uhrzeigersinn zu drehen. Die Seitenfläche der Sperrstütze 6 wirkt auf die Endbrücke 173 des elastischen Elements 170 der Ablage 100 ein. Unter der Wirkung des zur Drehachse L1 der Ablage gerichteten Radialbestandteils dieser Kraft wird das elastische Element 170 der Ablage 100 in der waagerechten Ebene gebogen. Sein freies Ende wird in Richtung der Achse L1 verschoben. Das elastische Element wird dabei durch die Außenfläche des elastischen Außenteils 171 an die Sperrstütze 6 gedrückt und gleitet darauf. Dabei wirkt die Reibungskraft der Ablage 100 auf ihre Nachbarablagen 200 und 400 ein. Die Reibungskraft strebt danach, diese Ablagen im Anschluss an die herausgefahrene Ablage 100 mitzureißen und sie auch im Uhrzeigersinn zu drehen. Diese Kraft wird auf die zur Sperrstütze 6 zugewendeten Anschlagbrücken 276 an den vorderen Enden der Anschlagbünde 203 dieser Ablagen 200 und 400 übertragen. Die Anschlagbrücken 276 schlagen an der Sperrstütze 6 an. Dank diesem Anschlag bleiben die Ablagen 200 und 400 unbeweglich. Je nach Drehung der Ablage 100 entsteht an der von ihr vorher belegten Stelle ein freier Raum. Unter der Wirkung des Gewichts der Ablagen, welche oberhalb der Ablage 100 angeordnet sind, kommt die obere Nachbarablage 400 so lange nach unten, bis der untere Teil ihres Anschlagbundes 203 gegen den oberen Teil des Anschlagbundes 203 der unteren Nachbarablage 200 anschlägt. Somit nimmt der Anschlagbund 203 der Ablage 200 einen Teil des Gewichts des oberen Teils des Stapels 70 auf. Dabei wird die Belastung der ausgefahrenen Ablage 100 reduziert. Gleichzeitig entsteht unter der oberen Nachbarablage 400 ein freier Raum. Die Höhe dieses freien Raums entspricht der Höhe des nach oben vorragenden Teils des Anschlagbundes 203 der Ablage 200. Danach wird die Ablage 100 um einen Winkel gedreht, welcher für die Entnahme der CD 10 aus der Ablage 100 ausreicht. Die Seitenflächen der radialen Vorsprünge 151 der Ablage 100 schlagen gegen die Kanten 44 der Löcher der Stütze 40 der Abdeckstütze 5 an. Dadurch wird die Drehung der Ablage 100 gestoppt. Danach nimmt der Benutzer die CD 10 vom Trägerteil 58 der Sicherung des Deckels 50, legt sie auf die dafür vorgesehene Stelle in der Ablage 100 und zwar auf die Auflageplatte 161 und sperrt die CD, indem er sie (durch das Loch) auf den Innensperrbund 162 aufsetzt. Dabei wird der aus dem Stapel 70 herausgezogene breite Teil 102 der Ablage 100 der Betätigung durch die Hand des Benutzers abwärts, der Einwirkung des Gewichts der CD und der Einwirkung des eigentlichen Gewichts der Ablage ausgesetzt. Jede dieser Kräfte erzeugt ein Moment an dem Arm, welcher dem Abstand von der Achse L1 bis zu ihrer Wirkungslinie gleich ist. Dem Gesamtmoment der Wirkung dieser Kräfte wirkt das Moment der Einwirkung der durch das Gewicht der höher angeordneten Ablagen im Stapel 70 erzeugten Kräfte auf den schmalen Teil der ausgefahrenen Ablage und der Reaktionskräfte der unteren Ablage 200 entgegen. Sollte diese Gegenwirkung für den Ausgleich des genannten Gesamtmoments nicht ausreichen, z. B. wenn die ausgefahrene Ablage im Stapel 70 oben liegt, und wenn das Gewicht der darüber liegenden Ablagen nicht genügt, so greifen die Reaktionskräfte der oberen Haken 241 der unteren Nachbarablage 200 ein. Diese Kräfte wirken auf die unteren Haken 131 der Ablage 100 abwärts ein, indem die Verschiebung des schmalen Teils 101 der Ablage 100 nach oben verhindert wird. Danach betätigt der Benutzer den Griff 110 der Ablage 100 mit der Hand, dreht die Ablage 100 entgegen dem Uhrzeigersinn um die Achse L1 und führt sie in den Stapel 70 zurück. Die Ablage 100 wird in den Stapel 70 hineingefahren und gerät dabei in den genannten freien Raum unter der oberen Nachbarablage 400. Die obere Nachbarablage 400 schlägt dabei an den Anschlagbund 203 der unteren Nachbarablage 200 an, die den Teil des Gewichts jener Ablagen aufnimmt, welche höher als die Ablage 100 liegen. Dadurch wird die Reibungskraft reduziert, welche das Einfahren der Ablage 100 in den Stapel 70 verhindert. Danach wirkt die Ablage 100 beim Einfahren in den Stapel 70 mittels ihrer Reibungskräfte auf die Nachbarablagen 200 und 400 ein. Diese strebt danach, sie entgegen dem Uhrzeigersinn zu drehen und aus dem Stapel 70 hinauszufahren. Diese Wirkung der Reibungskräfte wird auf die elastischen Elemente 270 der Ablagen 200 und 400 übertragen. Die elastischen Elemente 270 wirken auf die Sperrstütze 6 mittels ihrer Endbrücken 273. Die Gegenwirkung der Sperrstütze 6 auf die Ablagen 200 und 400 bremst sie ab und verhindert ihr Herausfahren aus dem Stapel 70. Danach wirkt die Sperrstütze 6 auf die sich bewegende Außenfläche des Außenteils 171 des elastischen Elements 170 der Ablage 100, da sie darauf gleitet und das elastische Element 170 in der waagerechten Ebene biegt. Am Ende der Rückdrehung der Ablage -100 schnappt die Endbrücke 173 des elastischen Elements 170 die Sperrstütze 6 ein. Das elastische Element 170 biegt sich unter der Wirkung der elastischen Kräfte gerade. Sein Begrenzer 174 schlägt an der Sperrstütze 6 an.

Um die CD 10 dem CD-Ordner 1 zu entnehmen, zieht der Benutzer die Ablage, z. B. Ablage 100, am Griff 110 gemäß der Beschreibung oben heraus und nimmt die CD 10 mit zwei Fingern heraus. Dabei kann der Benutzer die CD 10 an ihrer Außenkante durch die Löcher 106 entnehmen. Er kann auch alternativ die CD 10 mit einem Finger (z. B. Zeigefinger) an der Kante des CD-Lochs und mit dem zweiten Finger (z B. mit dem Daumen) an der Außenkante entnehmen.

Andere Ablagen 200, 300 oder 400 enthalten die gleichen Elemente wie die Ablage 100. Bei einer Zusammenwirkung mit der Stütze 40 und mit den entsprechenden Elementen der Nachbarablagen funktionieren diese Elemente ähnlich wie die der Ablage 100.

### Ablauf des Zusammenbaus des CD-Ordners 1

Der Zusammenbau des Stapels 70, die Verbindung des Stapels 70 mit dem Untersatz 20, die Verbindung des Untersatzes 20 mit der Sperrstütze 6, die Verbindung der Abdeckstütze 5 mit dem Untersatz 20 und mit der Sperrstütze 6 und der Einsatz des Bechers 65 in das obere Loch der Stütze 40 der Abdeckstütze 5 läuft wie folgt ab.

Der Zusammenbau des Stapels 70: Die Nachbarablagen 100 und 200, 200 und 300, 300 und 400, 400 und 100 werden der Reihe nach miteinander verbunden. Dafür werden die unteren und die oberen Haken 131 und 241, 231 und 141 in Eingriff gebracht. Um z. B. die Haken 131 und 241 der Nachbarablagen 100 und 200 in Eingriff zu bringen, müssen folgende Handlungen ausgeführt werden:
- die Ablage 100 wird oben auf die Ablage 200 aufgelegt;
- die Außenfläche des mittleren Rings 120 der Ablage 100 wird an die Innenfläche des ringförmigen Rands 240 der Ablage 200 angepasst,
- die Ablage 100 wird im Uhrzeigersinn in der Draufsicht gedreht, bis das hintere Ende des Anschlagbundes 103 der Ablage 100 gegen das hintere Ende des Anschlagbundes 203 der Ablage 200 anschlägt,
- die Ablage 100 wird oben auf die Ablage 200 angedrückt und bis zum Anschlag verschoben, indem die Außenfläche des mittleren Rings 120 der Ablage 100 durch die Innenfläche des ringförmigen Rands 240 der Ablage 200 umfasst wird,
- die Ablage 100 wird entgegen dem Uhrzeigersinn in die Grundstellung gedreht.

Um den Stapel 70 mit dem Untersatz 20 zu verbinden, müssen die unteren Haken 231 der Ablage 400 mit den Haken 31 des Untersatzes 20 in Eingriff gebracht werden. Dafür müssen folgende Handlungen ausgeführt werden:
- der Untersatz 20 wird an den Stapel 70 unten angelegt,
- die Außenfläche des mittleren Rings 220 der Ablage 400 wird an die Innenfläche des Sperrrands 30 des Untersatzes 20 angepasst,
- der Untersatz 20 wird im Uhrzeigersinn in der Draufsicht in Bezug auf den Stapel 70 gedreht, bis die Querbrücke an dem hinteren Ende des Anschlagbundes 23 des Untersatzes 20 gegen das hintere Ende des Anschlagbundes 203 der Ablage 400 anschlägt,
- der Stapel 70 wird oben an den Untersatz 20 angedrückt,
- die Ablage 400 und der Untersatz 20 wird bis zum Anschlag zusammengeschoben, indem die Außenfläche des mittleren Rings 220 der Ablage 400 durch die Innenfläche des Sperrrands 30 des Untersatzes 20 umfasst wird,
- der Untersatz 20 wird entgegen dem Uhrzeigersinn in die Grundstellung gedreht.

Um den Untersatz 20 mit der Sperrstütze 6 zu verbinden, müssen alle Ablagen 100, 200, 300 und 400 mit Hilfe einer dafür geeigneten Vorrichtung um einen bestimmten Winkel gedreht werden. Dies ist erforderlich, um die elastischen Elemente 170 und 270 außerhalb jenes Raums zu bringen, in dem sich die Sperrstütze 6 befindet. Danach muss die Sperrstütze 6 von oben bis zum Anschlag an der Aufnahmestelle für die Sperrstütze des Untersatzes 26 eingesetzt werden.

Um die Abdeckstütze 5 mit dem Untersatz 20 und mit der Sperrstütze 6 zu verbinden, müssen folgende Handlungen ausgeführt werden:
- die Stütze 40 der Abdeckstütze 5 wird in die Löcher der Ablagen 100, 200, 300 und 400 eingeführt,
- die Abdeckstütze 5 wird nach unten gesenkt,
- das untere Ende der Stütze 40 wird in die Aufnahmestelle für die Stütze 25 des Untersatzes 20 eingeführt,
- gleichzeitig wird das obere Ende der Sperrstütze 6 in die Aufnahmestelle für die Sperrstütze des Deckels 54 eingeführt,;
- die Abdeckstütze 5 wird oben an den Untersatz 20 angedrückt,
- der obere Teil des Befestigungsbundes 28 wird ausgewalzt, indem er mit einem geeigneten Werkzeug erwärmt wird, und dann an die Oberfläche der waagerechten Brücke 47 der Befestigungsbuchse 46 der Stütze 40 der Abdeckstütze 5 angedrückt.

Die Einrichtung 2 zur Aufbewahrung von CDs 10 enthält folgende Bestandteile: einen Untersatz 20, drei Stapel 70 der Ablagen 100, 200, 300 und 400, zwei Einsatzstützen 7, eine Abdeckstütze 5, eine Sperrstütze, eine Schraubenkupplung (Spannschloss) 95 und einen Becher 65. Die Bauteile des CD-Ordners 2: der Untersatz 20, der Stapel 70, die Ablagen 100, 200, 300 und 400, die Abdeckstütze 5 und der Becher 65 sind von dem oben beschriebenen CD-Ordner 1 übernommen und in Bezug auf die Achsen L1 und L2 ebenso angeordnet, wie die jeweiligen Bauteile des CD-Ordners 1. Der untere Stapel 70 ist auf dem Untersatz 20 aufgestellt. Die Stütze 80 der unteren Einsatzstütze 7 ist in die Löcher der Ablagen 100, 200, 300 und 400 des unteren Stapels 70 von oben eingesetzt. Das untere Ende der Stütze 80 schlägt an dem Untersatz 20 an. Der mittlere Stapel 70 ist auf dem Einsatzstück 90 der unteren Einsatzstütze 7 aufgebaut. Die Stütze 80 der oberen Einsatzstütze 7 ist in die Löcher der Ablagen 100, 200, 300 und 400 des mittleren Stapels 70 eingesetzt. Das untere Ende der Stütze 80 der oberen Einsatzstütze 7 schlägt an der unteren Einsatzstütze 7 an. Der obere Stapel 70 ist auf dem Einsatzstück 90 der oberen Einsatzstütze 7 aufgestellt. Die Stütze 40 der Abdeckstütze 5 ist in die Löcher der Ablagen 100, 200, 300 und 400 des oberen Stapels 70 eingesetzt. Das untere Ende der Stütze 40 schlägt an der oberen Einsatzstütze 7 an.

Die Schraubenkupplung enthält einen Stift und zwei Muttern und spannt den Untersatz 20 und die Abdeckstütze 5 zusammen. Damit werden sie an beiden Seiten an die dazwischen liegenden Einsatzstützen 7 angepresst. Die Einsatzstützen 7 werden dabei aneinander angedrückt. Dadurch wird zwischen allen diesen Bauteilen eine steife Verbindung hergestellt. Die Ausführung der oberen Mutter ermöglicht eine Zusammenwirkung mit der oberen Oberfläche der waagerechten Brücke 47 der Befestigungsbuchse im Boden der Stütze 40. Die Ausführung der unteren Mutter ermöglicht eine Zusammenwirkung mit der unteren Oberfläche der Aufnahmestelle für die Halterung 27 des Untersatzes 20. Der Stift ist in die der Achse L1 koaxialen Löcher des Untersatzes 20, der Einsatzstützen 7 und der Stütze 40 eingesetzt.

Die untere Ablage 400 im unteren Stapel 70 ist mit dem Untersatz 20 genauso wie bei der Einrichtung 1 verbunden. Die Verbindung der Ablagen 100, 200, 300 und 400 mit der Stütze 80 der unteren Einsatzstütze 7 ist mit ihrer Verbindung mit der Stütze 40 in der Einrichtung 1 identisch. Die untere Ablage 400 im mittleren Stapel 70 ist mit der unteren Einsatzstütze 7 so verbunden, dass die Verschiebung in Bezug auf Achse L1 begrenzt ist und dass eine Drehbarkeit in Bezug auf Achse L1 sichergestellt ist. Die Ablagen 100, 200, 300 und 400 des mittleren Stapels 70 sind mit der Stütze 80 der oberen Einsatzstütze 7 genauso verbunden wie die Ablagen 100, 200, 300 und 400 des unteren Stapels 70 mit der Stütze 80 der unteren Einsatzstütze 7, wie es oben beschrieben ist. Die untere Ablage 400 im oberen Stapel 70 ist mit der oberen Einsatzstütze 7 so verbunden, dass die Verschiebung in Bezug auf die Achse L1 begrenzt ist und dass eine Drehbarkeit zur Achse L1 sichergestellt ist. Die Ablagen 100, 200, 300 und 400 des oberen Stapels 70 sind mit der Stütze 40 der Abdeckstütze 5 ebenso wie in der Einrichtung 1 verbunden.

Jede Einsatzstütze 7 des CD-Ordners 2 ist als dünnwandiges Kunststoffbauteil ausgebildet. Sie enthält die Stütze 80, die senkrecht entlang der Achse L1 angeordnet ist, und das mit ihrem oberen Teil fest verbundene Einsatzstück 90. Die Stütze 80 ist in Form von einem oben offenen Becher ausgebildet. Sie enthält den unteren, den mittleren und den oberen Teil. Der untere Teil der Stütze 80 hat die gleiche Form und enthält dieselben Elemente wie der untere Teil der Stütze 40 der Abdeckstütze 5 des CD-Ordners 1. Seine Ausführung ermöglicht ebenfalls seine Aufstellung oben in die Aufnahmestelle für die Stütze 25 des Untersatzes 20. Darüber hinaus ist der untere Teil der Stütze 80 so ausgebildet, dass sie in die Ausweitung 85 des oberen Teils der Stütze 80 einer beliebigen anderen Einsatzstütze 7 von oben eingebaut werden kann. Der mittlere Teil der Stütze 80 hat die gleiche Form und enthält die gleichen Elemente wie der mittlere Teil der Stütze 40 der Abdeckstütze 5 des CD-Ordners 1. Er ist ebenso mit den Ablagen 100, 200, 300 und 400 verbunden. Der obere Teil der Stütze 80 enthält eine Ausweitung 85 in Querrichtung. Die Ausbildung der Ausweitung ermöglicht es, dass der untere Teil der Stütze 80 der Einsatzstütze 7 oder der untere Teil der Stütze 40 der Abdeckstütze 5 mit minimalem positiven bzw. negativen Spiel umfasst werden kann. Die Stufe 86 ist an der Übergangsstelle vom schmaleren mittleren Teil zum breiteren oberen Teil ausgebildet. Diese Stufe 86 dient als Anschlag für das untere Ende der Stütze 80 des CD-Ordners 2 oder das untere Ende der Stütze 40 des CD-Ordners 1. Dieser Anschlag begrenzt ihre Verschiebung nach unten. Das Einsatzstück 90 der Einsatzstütze 7 ist als ein dünnwandiges Kunststoffbauteil ausgebildet. Es enthält folgende Elemente: die Grundplatte 91, den Konturbund 92, den Anschlagbund 93, die Vertiefung 94, den Sperrrand 30, drei Haken 31 und die Versteifungsrippen 32. Ihre Ausführung ermöglicht die Zusammenwirkung mit dem Stapel 70, so wie es bei den der Form, Funktion und Anordnung nach entsprechenden Elementen des Untersatzes 20 der Fall ist. Das Einsatzstück 90 enthält eine Buchse 96 für die Sperrstütze. Die Ausbildung der Buchse ermöglicht es, dass die Außenfläche der Sperrstütze des CD-Ordners 2 durch ihre Innenfläche umfasst werden kann.

Die Sperrstütze des CD-Ordners 2 ist als ein Stab mit Rundquerschnitt ausgebildet. Die Sperrstütze ist senkrecht angeordnet. Sie ist mit dem Untersatz 20 so verbunden, dass die waagerechten Verschiebungen sowie die senkrechte Verschiebung nach oben begrenzt sind. Die Begrenzung erfolgt dadurch, dass das untere Ende der Sperrstütze durch die Aufnahmestelle für die Sperrstütze des Untersatzes 26 erfasst wird. Die Sperrstütze ist mit der Abdeckstütze 5 so verbunden, dass die waagerechten Verschiebungen und die senkrechte Verschiebung nach oben begrenzt sind. Die Begrenzung erfolgt dadurch, dass das obere Ende der Sperrstütze durch die Aufnahmestelle für die Sperrstütze des Deckels 54 umfasst wird. Die Sperrstütze ist mit jeder Einsatzstütze 7 so verbunden, dass die waagerechten Verschiebungen begrenzt sind. Die Begrenzung erfolgt dadurch, dass die Seitenfläche der Sperrstütze durch die Buchse 96 für die Sperrstütze umfasst wird.

## Patentansprüche

1. Einrichtung (1) zur Aufbewahrung von CDs (10) mit einem Untersatz (20) und einem darauf oben aufgestellten Stapel (70) übereinander angeordneter Ablagen (100, 200, 300 und 400), wobei sich die oberen Ablagen auf den unteren abstützen, wobei die Ablagen mit Auflageflächen für die CDs (10) versehen sind und die Einrichtung (1) so ausgebildet ist, dass diese Auflageflächen aus dem Stapel (70) herausfahrbar sind, indem die Ablagen (100, 200, 300 und 400) um eine einzige außerhalb dieser Auflageflächen durchlaufende Achse (L1) drehbar gelagert sind, wobei die Einrichtung (1) ein Sperrelement (6) aufweist, welches mit dem Untersatz (20) verbunden ist und entlang der genannten Achse (L1) angeordnet ist
**dadurch gekennzeichnet,**
**dass** das Sperrelement (6) mit den Ablagen (100, 200, 300 und 400) in ihrer Grundstellung in Kontakt steht, wobei die Möglichkeit eines Anschlags sichergestellt ist, welcher die genannte Drehung begrenzt, und
**dass** die Nachbarablagen, d. h. die zwei direkt aneinander anliegenden Ablagen (100 und 200, oder 200 und 300, oder 300 und 400, oder 400 und 100) mit Teilen des Sperrelements (6) so in Kontakt stehen, dass ein Anschlag ermöglicht ist, welcher eine Drehung dieser Nachbarablagen (100 und 200, oder 200 und 300, oder 300 und 400, oder 400 und 100) gegenläufig begrenzt.

2. Einrichtung (1) nach Anspruch 1, **dadurch gekennzeichnet, dass** wenigstens eine von zwei in Bezug auf die gleiche Ablage (200 oder 300) benachbarten Ablagen (100 oder 300; 200 oder 400) ein Anschlagelement (103 oder 203) aufweist, welches zur zweiten benachbarten Ablage (300 oder 400) so hervorragt, dass es dagegen anschlägt, und dass dieser Anschlag ein Näherkommen dieser beiden benachbarten Ablagen (100 und 300; 200 und 400) begrenzt.

3. Einrichtung (1) nach Anspruch 2, **dadurch gekennzeichnet, dass** das genannte Anschlagelement als ein Anschlagbund (103, 203) ausgebildet ist, welcher die Ablage (100, 200) an der Seite ihres Herausfahrens aus dem Stapel (70) begrenzt.

4. Einrichtung (1) nach Anspruch 3, **dadurch gekennzeichnet, dass** die von der Drehachse (L1) der Ablagen (100 und 200) am weitesten entfernten Kanten (176 und 276) der Anschlagbünde (103 und 203) so ausgebildet sind, dass der genannte Kontakt mit dem Sperrelement (6) des CD-Ordners (1) gesichert ist.

5. Einrichtung (1) nach Anspruch 4, **dadurch gekennzeichnet, dass** die Anschlagbünde (103, 203) an den Ablagen (100, 200) nach oben hervorragen.

6. Einrichtung (1) nach einem der Ansprüche 1 bis 5, **dadurch gekennzeichnet, dass** das Sperrelement (6) mit den Aussenflächen der Ablagen (100, 200, 300 und 400) im Kontakt steht, wobei die Aussenflächen von der Achse (L1) in Richtung der CD-Aufnahmeflächen (10) entfernt sind.

7. Einrichtung (1) nach Anspruch 6, **dadurch gekennzeichnet, dass** die Ablagen (100 und 200) mit elastischen Elementen (170 und 270) versehen sind, die bei der Grundstellung der Ablagen (100 und 200) mit dem Sperrelement (6) in Kontakt stehen und die so ausgebildet sind, dass sie sich elastisch verformen, wenn das Sperrelement (6) auf sie einwirkt.

8. Einrichtung (1) nach Anspruch 7, **dadurch gekennzeichnet, dass** das elastische Element (170 oder 270) ein Ende aufweist, welches mit anderen Teilen der Ablage (100 oder 200) verbunden ist, und
**dass** das elastische Element (170 oder 270) ein zweites freies Ende aufweist, welches am gebundenen Ende in Richtung seines Ausfahrens aus dem Stapel (70) hervorragt und welches in der Grundstellung dieser Ablage (100 oder 200) im Stapel (70) mit dem Sperrelement (6) in Kontakt steht.

9. Einrichtung (1) nach Anspruch 8, **dadurch gekennzeichnet, dass** das elastische Element (170 oder 270) der Ablage (100 oder 200) an seinem freien Ende einen Vorsprung (174 oder 274) aufweist, welcher in der Grundstellung dieser Ablage (100 oder 200) im Stapel (70) mit dem Sperrelement (6) auf der Seite der Achse (L1) in Kontakt steht, so dass eine Verschiebung in Richtung weg von dieser Achse (L1) begrenzt ist.

10. Einrichtung (1) nach Anspruch 9, **dadurch gekennzeichnet, dass** das elastische Element (170 oder 270) der Ablage (100 oder 200) zwei Teile (171 und 172 oder 271 und 272) aufweist, die sich von einem Ende des elastischen Elements (170 oder 270) zum anderen einander entlang ziehen und die nur an diesen Enden miteinander verbunden sind.

11. Einrichtung (1) nach einem der Ansprüche 1 bis 5 oder 7 bis 10, **dadurch gekennzeichnet,**
**dass** die Ablagen (100, 200, 300 und 400) Öffnungen rings um die genannte Achse (L1) aufweisen,
**dass** das Sperrelement in diese Öffnungen eingesetzt ist,
**dass** das Sperrelement dabei als eine Stütze (41) ausgebildet ist, welche wenigstens eine Längsnut aufweist,
**dass** die Ablagen (100 und 200) radiale Vorsprünge (151 und 251) enthalten, die zur Innenseite der Öffnungen gerichtet und in dieser Längsnut so angeordnet sind, dass eine Möglichkeit der Zusammenwirkung mit ihren Kanten sichergestellt ist, wobei die radialen Vorsprünge (151 und 251) der Nachbarablagen (100 und 200) in der Grundstellung mit verschiedenen Kanten einer Längsnut in Kontakt stehen.

12. Einrichtung (1) nach Anspruch 11, **dadurch gekennzeichnet, dass** die Länge der genannten Längsnut in Kreisrichtung sowie die Länge des radialen Vorsprungs (151 oder 251) der Ablage (100 oder 200) in der gleichen Richtung so ausgebildet sind, dass dieser Vorsprung (151 oder 251) an der zweiten Kante dieser Nut anschlägt und zwar nach einer Drehung dieser Ablage (100 oder 200) um einen Winkel, welcher für eine Entnahme der CD (10) aus der Ablage erforderlich ist.

13. Einrichtung (1) nach Anspruch 12, **dadurch gekennzeichnet,**
**dass** die Stütze (41) zwei Nuten aufweist und
**dass** die Ablagen (100 und 200) je zwei radiale Vorsprünge (151 und 251) enthalten, wobei jeder dieser Vorsprünge (151, 251) in eine dieser Nuten eingesetzt ist.

14. Einrichtung nach Anspruch 1, **dadurch gekennzeichnet, dass** ein Sperrelement (500) mit den Aussenflächen der Ablagen (3) in Kontakt steht, wobei die Aussenflächen der Ablagen (3) von der Achse (L1) in entgegengesetzter Richtung von den Auflageflächen für die CD (10) entfernt sind.

15. Einrichtung nach Anspruch 1, **dadurch gekennzeichnet,**
**dass** die Ablagen (100, 200, 300, 400) Öffnungen entlang der genannten Achse (L1) aufweisen, dass das Sperrelement (500) in diese Öffnungen eingesetzt ist und mit ihren Kanten in Kontakt steht und
**dass** die genannte Achse (L1) ausserhalb dieser Öffnungen verläuft.

16. Einrichtung (1) nach einem der Ansprüche 1 bis 5 oder 7 bis 10 oder 12 bis 15, **dadurch gekennzeichnet, dass** die Ablagen (100, 200, 300 und 400) so ausgebildet sind, dass die CDs (10) darin auf einer Achse (L2) parallel zur Achse (L1) angeordnet sind.

17. Einrichtung (1) nach Anspruch 16, **dadurch gekennzeichnet, dass** das Sperrelement (6) eine Längsachse aufweist, welche mit den beiden Achsen (L1 und L2) gleichläufig ist und welche mit diesen in einer Ebene liegt.

18. Einrichtung (1) nach einem der Ansprüche 1 bis 5 oder 7 bis 10 oder 14 bis 17, **dadurch gekennzeichnet, dass** das Sperrelement (6) als ein Stab mit einem Rundquerschnitt ausgebildet ist.

19. Einrichtung (1) nach Anspruch 17, **dadurch gekennzeichnet, dass** die genannten Achsen (L1 und L2) senkrecht ausgebildet sind.

20. Einrichtung (1) nach einem der Ansprüche 1 bis 5 oder 7 bis 10 oder 12 bis 15 oder 17 oder 19, **dadurch gekennzeichnet, dass** die Ablagen (100, 200, 300 und 400) Griffe (110, 210, 310 und 410) für das Greifen mit der Hand aufweisen, welche an den Ablagen ausserhalb des Stapels (70) in Richtung des Ausfahrens der CD-Aufnahmeflächen wenigstens in zwei Vertikalreihen hervorragen.

21. Einrichtung (1) nach Anspruch 3, **dadurch gekennzeichnet, dass** die Ablagen (100, 200, 300 und 400) Griffe (110, 210, 310 und 410) für das Greifen mit der Hand aufweisen, welche mit Anschlagbünden (103 oder 203) der Ablagen (100, 200, 300 und 400) verbunden sind und an den Ablagen ausserhalb des Stapels (70) in vier Vertikalreihen hervorragen.

22. Einrichtung (1) nach Anspruch 21, **dadurch gekennzeichnet, dass** die Griffe (110, 210, 310 und 410) oben durch Platten begrenzt sind, welche so ausgebildet sind, dass ihre nach aussen hervorragenden Kanten nach unten geneigt sind.

## Claims

1. A device (1) for storing CDs (10) comprising a base (20) and on top thereof an erected stack (70) of trays (100, 200, 300 and 400) arranged one on top of the other, wherein the upper trays are supported on the lower ones, wherein the trays are provided with bearing surfaces for the CDs (10) and the device (1) is configured such that these bearing surfaces are movable out of the stack (70) by supporting the trays (100, 200, 300 and 400) rotatably about a single axis (L1) extending outside these bearing surfaces, wherein the device (1) includes a locking element (6) connected to the base (20) and arranged along said axis (L1),
**characterized in**
- **that** the locking element (6) is in contact with the trays (100, 200, 300 and 400) in their basic position, wherein the possibility of a stop limiting said rotation is ensured, and
- **that** the neighbouring trays, i.e. the two directly adjacent trays (100 and 200, or 200 and 300, or 300 and 400, or 400 and 100), are in contact with portions of the locking element (6) such that a stop limiting a rotation of these neighbouring trays (100 and 200, or 200 and 300, or 300 and 400, or 400 and 100) in opposite directions is enabled.

2. The device (1) according to claim 1, **characterized in that** at least one of two trays (100 or 300; 200 or 400) neighbouring in relation to the same tray (200 or 300) includes a stop element (103 or 203) which protrudes to the second neighbouring tray (300 or 400) such that it is stopped against it, and that this stop limits approaching of these two neighbouring trays (100 and 300; 200 and 400).

3. The device (1) according to claim 2, **characterized in that** said stop element is configured as a stop collar (103, 203) limiting the tray (100, 200) at the side of its movement out of the stack (70).

4. The device (1) according to claim 3, **characterized in that** the edges (176 and 276) of the stop collars (103 and 203) which are farthest from the rotational axis (L1) of the trays (100 and 200) are configured such that said contact with the locking element (6) of the CD storage device (1) is ensured.

5. The device (1) according to claim 4, **characterized in that** the stop collars (103, 203) at the trays (100, 200) protrude upwardly.

6. The device (1) according to one of claims 1 to 5, **characterized in that** the locking element (6) is in contact with the outer surfaces of the trays (100, 200, 300 and 400), wherein the outer surfaces are at a distance from the axis (L1) in the direction of the CD bearing surfaces (10).

7. The device (1) according to claim 6, **characterized in that** the trays (100 and 200) are provided with resilient elements (170 and 270), which in the basic position of the trays (100 and 200) are in contact with the locking element (6) and which are configured such that they are resiliently deformed when the locking element (6) acts upon them.

8. The device (1) according to claim 7, **characterized in**
- **that** the resilient element (170 or 270) has one end which is connected to other portions of the tray (100 or 200) and
- **that** the resilient element (170 or 270) has a second free end which protrudes at the connected end in the direction of its movement out of the stack (70) and which in the basic position of this tray (100 or 200) in the stack (70) is contact with the locking element (6).

9. The device (1) according to claim 8, **characterized in that** the resilient element (170 or 270) of the tray (100 or 200) at its free end has a projection (174 or 274) which in the basic position of this tray (100 or 200) in the stack (70) is in contact with the locking element (6) at the side of the axis (L1) so that a displacement in the direction away from this axis (L1) is limited.

10. The device (1) according to claim 9, **characterized in that** the resilient element (170 or 270) of the tray (100 or 200) includes two portions (171 and 172 or 271 and 272) which extend along each other from one end of the resilient element (170 or 270) to the other one and which are interconnected only at these ends.

11. The device (1) according to one of claims 1 to 5 or 7 to 10, **characterized in**
- **that** the trays (100, 200, 300 and 400) have openings all around said axis (L1),
- **that** the locking element is inserted in these openings,
- **that** therein the locking element is configured as a support (41) which has at least one longitudinal groove,
- **that** the trays (100 and 200) comprise radial projections (151 and 251) directed towards the inside of the openings and arranged in this longitudinal groove such that a possibility of cooperation with its edges is ensured, wherein the radial projections (151 and 251) of the neighbouring trays (100 and 200) in the basic position are in contact with different edges of a longitudinal groove.

12. The device (1) according to claim 11, **characterized in that** the length of said longitudinal groove in the circular direction as well as the length of the radial projection (151 and 251) of the tray (100 or 200) are configured in the same direction such that this projection (151 or 251) is stopped against the second edge of this groove, namely after a rotation of this tray (100 or 200) about an angle required for removing the CD (10) from the tray.

13. The device (1) according to claim 12, **characterized in**
- **that** the support (41) has two grooves and
- **that** each of the trays (100 and 200) comprises two radial projections (151 and 251), wherein each of these projections (151, 251) is inserted in one of these grooves.

14. The device according to claim 1, **characterized in that** a locking element (500) is in contact with the outer surfaces of the trays (3), wherein the outer surfaces of the trays (3) are at a distance from the axis (L1) in the opposite direction of the bearing surfaces for the CD (10).

15. The device according to claim 1, **characterized in**
- **that** the trays (100, 200, 300, 400) have openings along said axis (L1),
- **that** the locking element (500) is inserted in these openings and is in contact with their edges, and
- **that** said axis (L1) extends outside these openings.

16. The device (1) according to one of claims 1 to 5 or 7 to 10 or 12 to 15, **characterized in that** the trays (100, 200, 300 and 400) are configured such that the CDs (10) in them are arranged on an axis (L2) in parallel to the axis (L1).

17. The device (1) according to claim 16, **characterized in that** the locking element (6) has a longitudinal axis which extends in the same direction as the two axes (L1 and L2) and lies in one plane together with them.

18. The device (1) according to one of claims 1 to 5 or 7 to 10 or 14 to 17, **characterized in that** the locking element (6) is configured as a rod having a round cross section.

19. The device (1) according to claim 17, **characterized in that** said axes (L1 and L2) are configured to be vertical.

20. The device (1) according to one of claims 1 to 5 or 7 to 10 or 12 to 15 or 17 to 19, **characterized in that** the trays (100, 200, 300 and 400) include grips (110, 210, 310 and 410) for gripping with a hand, which protrude at the trays outside the stack (70) in the direction of movement of the CD bearing surfaces at least in two vertical rows.

21. The device (1) according to claim 3, **characterized in that** the trays (100, 200, 300 and 400) include grips (110, 210, 310 and 410) for gripping with a hand, which are connected to stop collars (103 or 203) of the trays (100, 200, 300 and 400) and protrude at the trays outside the stack (70) in four vertical rows.

22. The device (1) according to claim 21, **characterized in that** the grips (110, 210, 310 and 410) are limited at the top by plates configured such that their outwardly protruding edges are inclined downwards.

## Revendications

1. Dispositif (1) de stockage de CD (10) comportant une base (20) et une pile (70) posée dessus de supports (100, 200, 300 et 400) disposés les uns sur les autres, les supports du dessus s'appuyant sur ceux du dessous, les supports étant munis de logements pour les CD (10) et le dispositif (1) étant configuré de sorte que ces logements peuvent être retirés de la pile (70) par le fait que les supports (100, 200, 300 et 400) sont montés de manière à pourvoir tourner autour d'un axe (L1) unique extérieur à ces logements, le dispositif (1) présentant un élément de blocage (6), lequel est relié à la base (20) et est disposé le long dudit axe (L1), **caractérisé**
**en ce que** l'élément de blocage (6) est en contact avec les supports (100, 200, 300 et 400) dans leur position de base, la possibilité d'une butée étant garantie, laquelle limite ladite rotation, et
**en ce que** les supports adjacents, c'est-à-dire les deux supports se trouvant directement les uns à côté des autres (100 et 200, ou 200 et 300, ou 300 et 400, ou 400 et 100) étant en contact avec des parties de l'élément de blocage (6), de sorte qu'une butée est rendue possible, laquelle limite une rotation de ces supports adjacents (100 et 200, ou 200 et 300, ou 300 et 400, ou 400 et 100) dans des sens opposés.

2. Dispositif (1) selon la revendication 1, **caractérisé en ce qu'**au moins un de deux supports (100 ou 300 ; 200 ou 400) adjacents par rapport au même support (200 ou 300) présente un élément de butée (103 ou 203), lequel fait saillie vers le deuxième support adjacent (300 ou 400) de sorte qu'il bute contre celui-ci et que cette butée limite un rapprochement de ces deux supports adjacents (100 ou 300 ; 200 ou 400).

3. Dispositif (1) selon la revendication 2, **caractérisé en ce que** ledit élément de butée est configuré en tant qu'épaulement de butée (103, 203), lequel délimite le support (100, 200) sur le côté de sa sortie de la pile (70).

4. Dispositif (1) selon la revendication 3, **caractérisé en ce que** les bords (176 et 276) des épaulements de butée (103 et 203) les plus éloignés de l'axe de rotation (L1) des supports (100 et 200) sont configurés de sorte que ledit contact avec l'élément de blocage (6) du range-CD (1) est assuré.

5. Dispositif (1) selon la revendication 4, **caractérisé en ce que** les épaulements de butée (103, 203) dépassent vers le haut au niveau des supports (100, 200).

6. Dispositif (1) selon l'une des revendications 1 à 5, **caractérisé en ce que** l'élément de blocage (6) est en contact avec les surfaces externes des supports (100, 200, 300 et 400), les surfaces externes étant éloignées de l'axe (L1) dans le sens des logements pour les CD (110).

7. Dispositif (1) selon la revendication 6, **caractérisé en ce que** les supports (100 et 200) sont munis d'éléments élastiques (170 et 270) qui sont en contact avec l'élément de blocage (6) dans la position de base des supports (100 et 200) et qui sont configurés de sorte qu'ils se déforment élastiquement lorsque l'élément de blocage (6) agit sur eux.

8. Dispositif (1) selon la revendication 7, **caractérisé en ce que** l'élément élastique (170 ou 270) présente une extrémité, qui est reliée à d'autres parties du support (100 ou 200), et
**en ce que** l'élément élastique (170 ou 270) présente une deuxième extrémité libre, qui dépasse au niveau de l'extrémité reliée dans le sens de sa sortie de la pile (70) et qui est en contact avec l'élément de blocage (6) dans la position de base de ce support (100 ou 200) dans la pile (70).

9. Dispositif (1) selon la revendication 8, **caractérisé en ce que** l'élément élastique (170 ou 270) du support (100 ou 200) au niveau de son extrémité libre présente une saillie (174 ou 274), qui est en contact avec l'élément de blocage (6) sur le côté de l'axe (L1) dans la position de base de ce support (100 ou 200) dans la pile (70) de sorte qu'un déplacement dans le sens de l'éloignement vis-à-vis de cet axe (L1) est limité.

10. Dispositif (1) selon la revendication 9, **caractérisé en ce que** l'élément élastique (170 ou 270) du support (100 ou 200) présente deux parties (171 et 172 ou 271 et 272) qui sont disposées le long l'une de l'autre depuis une extrémité de l'élément élastique (170 ou 270) vers l'autre et qui ne sont reliées l'une à l'autre qu'à ces extrémités.

11. Dispositif (1) selon l'une des revendications 1 à 5 ou 7 à 10, **caractérisé**
**en ce que** les supports (100, 200, 300 et 400) présentent des ouvertures autour dudit axe (L1),
**en ce que** l'élément de blocage est introduit dans ces ouvertures,
**en ce que** l'élément de blocage est ainsi configuré en tant qu'appui (41), lequel présente au moins une rainure longitudinale,
**en ce que** les supports (100 et 200) comportent des saillies radiales (151 et 251) qui sont orientées vers l'intérieur des ouvertures et disposées dans cette rainure longitudinale de sorte qu'une possibilité de coopération avec ses bords est assurée, les saillies radiales (151 et 251) des supports adjacents (100 et 200) dans la position de base étant en contact avec les différents bords d'une rainure longitudinale.

12. Dispositif (1) selon la revendication 11, **caractérisé en ce que** la longueur de ladite rainure longitudinale dans le sens circulaire ainsi que la longueur de la saillie radiale (151 ou 251) du support (100 ou 200) dans le même sens sont configurées de sorte que cette saillie (100 ou 200) bute contre le deuxième bord de cette rainure et ce après une rotation de ce support (100 ou 200) d'un angle qui est nécessaire pour retirer le CD (10) du support.

13. Dispositif (1) selon la revendication 12, **caractérisé**
**en ce que** l'appui (41) présente deux rainures et
**en ce que** les supports (100 et 200) comportent chacun deux saillies radiales (151 et 251), chacune de ces saillies (151, 251) étant introduite dans une de ces rainures.

14. Dispositif selon la revendication 1, **caractérisé en ce qu'**un élément de blocage (500) est en contact avec les surfaces externes des supports (3), les surfaces externes des supports (3) étant éloignées de l'axe (L1) dans le sens opposé des logements pour les CD (10).

15. Dispositif selon la revendication 1, **caractérisé**
**en ce que** les supports (100, 200, 300, 400) présentent des ouvertures le long dudit axe (L1), en ce que l'élément de blocage (500) est introduit dans ces ouvertures et est en contact avec leurs bords et
**en ce que** ledit axe (L1) est à l'extérieur de ces ouvertures.

16. Dispositif (1) selon l'une des revendications 1 à 5 ou 7 à 10 ou 12 à 15, **caractérisé en ce que** les supports (100, 200, 300 et 400) sont configurés de sorte que les CD (10) à l'intérieur sont disposés sur un axe (L2) parallèle à l'axe (L1).

17. Dispositif (1) selon la revendication 16, **caractérisé en ce que** l'élément de blocage (6) présente un axe longitudinal, qui est parallèle aux deux axes (L1 et L2) et qui est sur le même plan qu'eux.

18. Dispositif (1) selon l'une des revendications 1 à 5 ou 7 à 10 ou 14 à 17, **caractérisé en ce que** l'élément de blocage (6) est configuré en tant que tige avec une coupe transversale ronde.

19. Dispositif (1) selon la revendication 17, **caractérisée en ce que** lesdits axes (L1 et L2) sont configurés de manière verticale.

20. Dispositif (1) selon l'une des revendications 1 à 5 ou 7 à 10 ou 12 à 15 ou 17 à 19, **caractérisé en ce que** les supports (100, 200, 300 et 400) présentent des moyens de préhension (110, 210, 310 et 410) pour la saisie à la main, lesquels dépassent à l'extérieur de la pile (70) au niveau des supports dans le sens de la sortie des logements de CD au moins dans deux rangées verticales.

21. Dispositif (1) selon la revendication 3, **caractérisé en ce que** les supports (100, 200, 300 et 400) présentent des moyens de préhension (110, 210, 310 et 410) pour la saisie à la main, lesquels sont reliés aux épaulements de butée (103 ou 203) des supports (100, 200, 300 et 400) et dépassent à l'extérieur de la pile (70) au niveau des supports dans quatre rangées verticales.

22. Dispositif (1) selon la revendication 21, **caractérisé en ce que** les moyens de préhension (110, 210, 310 et 410) sont délimités sur le dessus par des plaques, lesquelles sont configurées de sorte que leurs bords dépassant vers l'extérieur sont inclinés vers le bas.
